# EUROPEAN PATENT APPLICATION

(11) **EP 4 672 802 A1**
(43) Date of publication of application: **31.12.2025**
(21) Application number: 23923325.7
(22) Date of filing: 22.02.2023
(51) Int. Cl.: H04W 24/08

(54) **GLOBAL NAVIGATION SATELLITE SYSTEM (GNSS) MEASUREMENT METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/077756
(87) International publication number: WO 2024/174144

(57) **Abstract**

The embodiments of the present disclosure can be applied to the technical field of communications. Disclosed are a GNSS measurement method and apparatus. The method, which is executed by a terminal device, comprises: performing GNSS measurement according to a measurement interval. Therefore, GNSS measurement can be enhanced, and a terminal device can perform GNSS measurement according to a measurement interval without returning to an idle state.

## Description

### TECHNICAL FIELD

The present disclosure relates to the field of communication technology, and in particular to a global navigation satellite system (GNSS) measurement method and device.

### BACKGROUND

NTN (Non-terrestrial Network) is an important technology in recent years. It provides wireless resources through a satellite (or an unmanned aerial vehicle, UAV, etc.) instead of ground base stations.

### SUMMARY

The embodiments of the present disclosure provide a global navigation satellite system (GNSS) measurement method and apparatus, which can enhance GNSS measurement, and enable a terminal device to perform GNSS measurement according to a measurement gap without returning to an idle state.

In a first aspect, an embodiment of the present disclosure provides a GNSS measurement method, which is executed by a terminal device. The method includes: performing GNSS measurement according to a measurement gap.

In this technical solution, the terminal device performs GNSS measurements according to the measurement gap, thereby enhancing the GNSS measurement and allowing the terminal device to perform GNSS measurements according to the measurement gap without returning to the idle state.

In a second aspect, an embodiment of the present disclosure provides another GNSS measurement method, which is performed by a network-side device and includes at least one of the following:
sending first configuration information to a terminal device, where the first configuration information is used to indicate a threshold value, and the threshold value is used for the terminal device to perform GNSS measurement according to a measurement gap when satisfying the remaining GNSS validity period being less than the threshold value;
sending trigger information to the terminal device, where the trigger information is used for the terminal device to perform GNSS measurement according to the measurement gap when satisfying the trigger information sent by the network side device being received;
sending second configuration information to the terminal device, where the second configuration information is used to indicate a specified time, and the specified time is used for the terminal device to perform GNSS measurement according to the measurement gap when satisfying the specified time being reached; or
sending third configuration information to the terminal device, where the third configuration information is used to indicate the measurement gap, and the measurement gap is used by the terminal device to perform GNSS measurement according to the measurement gap.

In a third aspect, an embodiment of the present disclosure provides a communication device that implements some or all of the functions of the terminal device described in the method described in the first aspect above. For example, the functions of the communication device may include some or all of the functions in the embodiments of the present disclosure, or may include the functions of implementing any one of the embodiments of the present disclosure separately. The functions may be implemented by hardware or by hardware executing corresponding software. The hardware or software includes one or more units or modules corresponding to the above functions.

In one implementation, the communication device may include a transceiver module and a processing module, where the processing module is configured to support the communication device in performing the corresponding functions of the above-mentioned method. The transceiver module is used to support communication between the communication device and other devices. The communication device may also include a storage module, which is coupled to the transceiver module and the processing module and stores computer programs and data necessary for the communication device.

In one implementation, the communication device includes: a processing module configured to perform GNSS measurement according to a measurement gap.

In a fourth aspect, an embodiment of the present disclosure provides a communication device that implements some or all of the functions of the network-side device described in the method example described in the second aspect above. For example, the functions of the communication device may include some or all of the functions in the embodiments of the present disclosure, or may include the functions of implementing any one of the embodiments of the present disclosure separately. The functions may be implemented by hardware or by hardware executing corresponding software. The hardware or software includes one or more units or modules corresponding to the above functions.

In one implementation, the communication device may include a transceiver module and a processing module, where the processing module is configured to support the communication device in performing the corresponding functions of the above-mentioned method. The transceiver module is used to support communication between the communication device and other devices. The communication device may also include a storage module, which is coupled to the transceiver module and the processing module and stores computer programs and data necessary for the communication device.

In one implementation, the communication device includes: a transceiver module configured to perform at least one of the following:
send first configuration information to a terminal device, where the first configuration information is used to indicate a threshold value, and the threshold value is used for the terminal device to perform GNSS measurement according to a measurement gap when satisfying the remaining GNSS validity period being less than the threshold value;
send trigger information to the terminal device, where the trigger information is used for the terminal device to perform GNSS measurement according to the measurement gap when satisfying the trigger information sent by the network side device being received;
send second configuration information to the terminal device, where the second configuration information is used to indicate a specified time, and the specified time is used for the terminal device to perform GNSS measurement according to the measurement gap when satisfying the specified time being reached; or
send third configuration information to the terminal device, where the third configuration information is used to indicate the measurement gap, and the measurement gap is used by the terminal device to perform GNSS measurement according to the measurement gap.

In In a fifth aspect, an embodiment of the present disclosure provides a communication device, which includes a processor. When the processor calls a computer program in a memory, the method described in the first aspect is executed.

In a sixth aspect, an embodiment of the present disclosure provides a communication device, which includes a processor. When the processor calls a computer program in a memory, the method described in the second aspect is executed.

In a seventh aspect, an embodiment of the present disclosure provides a communication device, which includes a processor and a memory, in which a computer program is stored; the processor executes the computer program stored in the memory so that the communication device executes the method described in the first aspect above.

In an eighth aspect, an embodiment of the present disclosure provides a communication device, which includes a processor and a memory, in which a computer program is stored; the processor executes the computer program stored in the memory so that the communication device executes the method described in the second aspect above.

In a ninth aspect, an embodiment of the present disclosure provides a communication device, which includes a processor and an interface circuit, where the interface circuit is used to receive code instructions and transmit the code instructions to the processor, and the processor is used to run the code instructions to enable the device to execute the method described in the first aspect above.

In a tenth aspect, an embodiment of the present disclosure provides a communication device, which includes a processor and an interface circuit, where the interface circuit is used to receive code instructions and transmit the code instructions to the processor, and the processor is used to run the code instructions to enable the device to execute the method described in the second aspect above.

In an eleventh aspect, an embodiment of the present disclosure provides a GNSS measurement system, which includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

In a twelfth aspect, an embodiment of the present invention provides a computer-readable storage medium for storing instructions for the above-mentioned terminal device, and when the instructions are executed, the terminal device executes the method described in the first aspect.

In a thirteenth aspect, an embodiment of the present invention provides a readable storage medium for storing instructions used by the above-mentioned network-side device. When the instructions are executed, the network-side device executes the method described in the above-mentioned second aspect.

In a fourteenth aspect, the present disclosure further provides a computer program product comprising a computer program, which, when executed on a computer, enables the computer to execute the method described in the first aspect above.

In a fifteenth aspect, the present disclosure further provides a computer program product comprising a computer program, which, when executed on a computer, enables the computer to execute the method described in the second aspect above.

In a sixteenth aspect, the present disclosure provides a chip system comprising at least one processor and an interface for supporting a terminal device in implementing the functions described in the first aspect, such as determining or processing at least one of the data and information described in the aforementioned method. In one possible design, the chip system further comprises a memory for storing computer programs and data necessary for the terminal device. The chip system may consist of a chip alone or may include a chip and other discrete components.

In a seventeenth aspect, the present disclosure provides a chip system comprising at least one processor and an interface for supporting a network-side device in implementing the functions described in the second aspect, such as determining or processing at least one of the data and information described in the aforementioned method. In one possible design, the chip system further comprises a memory for storing computer programs and data necessary for the network-side device. The chip system may consist of a single chip or may include a chip and other discrete components.

In an eighteenth aspect, the present disclosure provides a computer program, which, when executed on a computer, enables the computer to execute the method described in the first aspect above.

In a nineteenth aspect, the present disclosure provides a computer program, which, when executed on a computer, enables the computer to execute the method described in the second aspect above.

### BRIEF DESCRIPTION OF THE DRAWINGS

In order to more clearly illustrate the technical solutions in the embodiments of the present disclosure or the background technology, the drawings required for use in the embodiments of the present disclosure or the background technology will be described below.
FIG. 1 is an architecture diagram of a communication system provided by an embodiment of the present disclosure;
FIG. 2 is a flowchart of a GNSS measurement method provided by an embodiment of the present disclosure;
FIG. 3 is a flowchart of another GNSS measurement method provided by an embodiment of the present disclosure;
FIG. 4 is a flowchart of another GNSS measurement method provided by an embodiment of the present disclosure;
FIG. 5 is a flowchart of another GNSS measurement method provided by an embodiment of the present disclosure;
FIG. 6 is a flowchart of another GNSS measurement method provided by an embodiment of the present disclosure;
FIG. 7 is a flowchart of another GNSS measurement method provided by an embodiment of the present disclosure;
FIG. 8 is a flowchart of another GNSS measurement method provided by an embodiment of the present disclosure;
FIG. 9 is a flowchart of another GNSS measurement method provided by an embodiment of the present disclosure;
FIG. 10 is a flowchart of another GNSS measurement method provided by an embodiment of the present disclosure;
FIG. 11 is a flowchart of another GNSS measurement method provided by an embodiment of the present disclosure;
FIG. 12 is a flowchart of another GNSS measurement method provided by an embodiment of the present disclosure;
FIG. 13 is a flowchart of another GNSS measurement method provided by an embodiment of the present disclosure;
FIG. 14 is a flowchart of another GNSS measurement method provided by an embodiment of the present disclosure;
FIG. 15 is a flowchart of another GNSS measurement method provided by an embodiment of the present disclosure;
FIG. 16 is a flowchart of another GNSS measurement method provided by an embodiment of the present disclosure;
FIG. 17 is a flowchart of another GNSS measurement method provided by an embodiment of the present disclosure;
FIG. 18 is a flowchart of another GNSS measurement method provided by an embodiment of the present disclosure;
FIG. 19 is a structural diagram of a communication device provided in an embodiment of the present disclosure;
FIG. 20 is a structural diagram of another communication device provided in an embodiment of the present disclosure;
FIG. 21 is a schematic diagram of the structure of a chip provided in an embodiment of the present disclosure.

### DETAILED DESCRIPTION

To facilitate understanding of the present disclosure, some concepts involved in the embodiments of the present disclosure are briefly introduced here.

### 1. Radio link failure (RLF)

In the Long Term Evolution (LTE) of universal mobile communication technology, when a terminal device detects a problem in communicating with the network-side, it is considered that the radio link between the network-side device and the terminal device has failed. The detection mechanism of radio link failure includes one or more of the following: (1) detection of a problem at the physical layer. For example, when the RRC layer of the terminal device receives out-of-sync indications from N consecutive primary cells (PCells) from the bottom layer, and does not receive synchronization indications from M consecutive primary cells (PCells) from the bottom layer for a period of time thereafter; (2) the random access process in the primary cell group fails; (3) the RRC layer of the terminal device receives an indication that the maximum number of retransmissions has been reached from the radio link control (RLC) layer of the primary cell group.

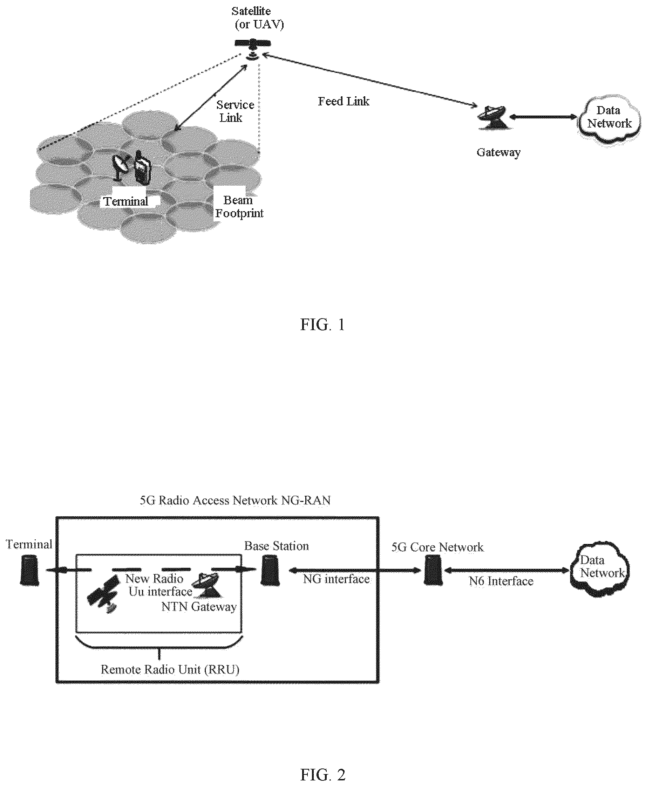

2. An example of NTN (non-terrestrial network) communication method is shown in FIG. 1.

According to the satellite signal processing method shown in FIG. 2, the NTN ground station sends the base station signal to the satellite. The satellite converts the signal to the satellite frequency band and then sends it to the terminal (also known as the terminal device) through the satellite frequency band. Apart from frequency conversion and signal amplification, the satellite does not demodulate the base station signal.

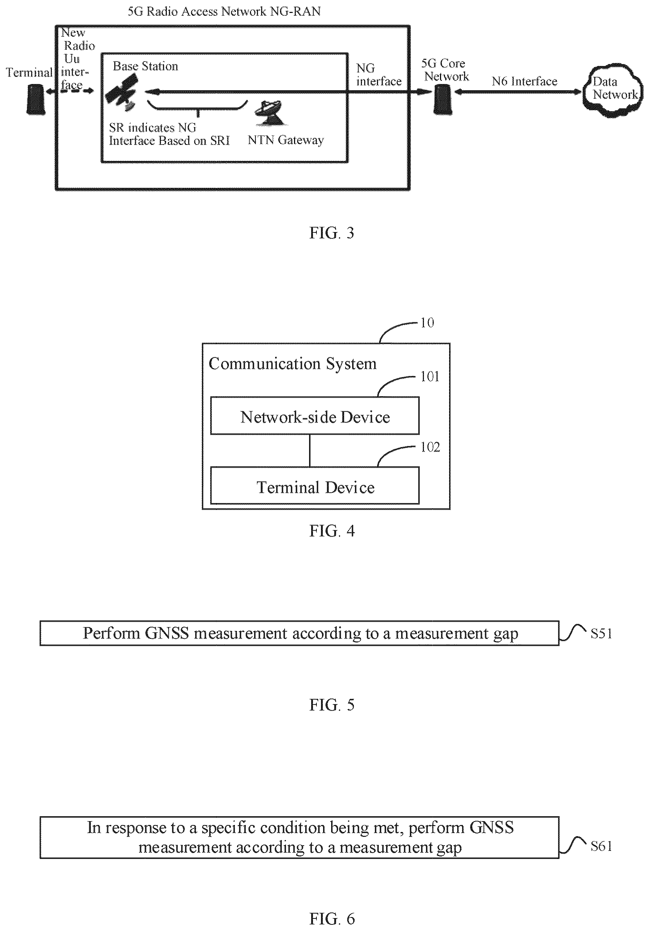

The regeneration mode is shown in FIG. 3. After the NTN ground station sends the base station signal to the satellite, the satellite first demodulates and decodes the signal, then re-encodes and modulates the signal, and sends the regenerated signal through the satellite frequency band.

Table 1 below shows the satellite altitude, orbit, and satellite coverage of a typical NTN network:

**Table 1**

| Platform | Altitude Range | Orbit | Typical beam projection size |
|---|---|---|---|
| Low-orbit satellite | 300-1500km | Earth's circular orbit | 100-1000km |
| Medium-orbit Satellite | 7000-25000km | | 100-1000km |
| High-orbit satellite | 35786km | Maintain the same pitch angle relative to the ground station | 200-3500km |
| High altitude platforms (including HAPS) | 8-50km (HAPS 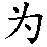 20km) | | 5-200km |
| Near-high-orbit satellite | 400-50000km | Earth's elliptical orbit | 200-3500km |

It should be understood that each element in Table 1 exists independently. These elements are illustratively listed in the same table, but this does not necessarily mean that all elements in the table must be present simultaneously as shown. The value of each element is independent of the value of any other element in Table 1. Therefore, those skilled in the art will understand that the value of each element in Table 1 represents an independent embodiment.

In order to better understand the GNSS measurement method and apparatus disclosed in the embodiments of the present disclosure, the communication system to which the embodiments of the present disclosure are applicable is first described below.

Hereinafter, embodiments of the present disclosure are described in detail, examples of which are shown in the accompanying drawings, where the same or similar reference numerals throughout represent the same or similar elements or elements having the same or similar functions. The embodiments described below with reference to the accompanying drawings are exemplary and are intended to be used to explain the present disclosure, and should not be construed as limiting the present disclosure.

Please refer to FIG. 4, which is a schematic diagram of the architecture of a communication system provided in an embodiment of the present disclosure. The communication system may include, but is not limited to, one network-side device and one terminal device. The number and configuration of devices shown in FIG. 4 are for example purposes only and do not constitute a limitation on the embodiments of the present disclosure. In actual applications, two or more network-side devices and two or more terminal devices may be included. The communication system 10 shown in FIG. 4 includes, for example, one network-side device 101 and one terminal device 102.

It should be noted that the technical solutions of the embodiments of the present disclosure can be applied to various communication systems, such as the Long Term Evolution (LTE) system, the fifth generation (5G) mobile communication system, the 5G New Radio (NR) system, or other future new mobile communication systems.

The network-side device 101 in the embodiments of the present disclosure is a network-side entity used to transmit or receive signals. For example, the network-side device 101 may be an evolved NodeB (eNB), a transmission reception point (TRP), a next-generation NodeB (gNB) in a NR system, a base station in other future mobile communication systems, or an access node in a wireless fidelity (WiFi) system. The embodiments of the present disclosure do not limit the specific technology and device form used by the network-side device 101. The network-side device 101 provided in the embodiments of the present disclosure may be composed of a central unit (CU) and a distributed unit (DU). The CU may also be referred to as a control unit. Using the CU-DU architecture, the network-side device 101, such as the protocol layers of the network-side device 101, may be split, with the functions of some protocol layers placed in the CU for central control, and the functions of the remaining part or all of the protocol layers distributed in the DU, which is centrally controlled by the CU.

The terminal device 102 in the embodiments of the present disclosure is a user-side entity for receiving or transmitting signals, such as a mobile phone. A terminal device may also be referred to as a user equipment (UE), a terminal, a mobile station (MS), or a mobile terminal (MT). A terminal device may be a car with communication capabilities, a smart car, a mobile phone, a wearable device, a tablet computer, a computer with wireless transceiver capabilities, a virtual reality (VR) terminal device, an augmented reality (AR) terminal device, a wireless terminal device used in industrial control, a wireless terminal device used in self-driving, a wireless terminal device used in remote medical surgery, a wireless terminal device used in smart grids, a wireless terminal device used in transportation safety, a wireless terminal device used in smart cities, or a wireless terminal device used in smart homes. The embodiments of the present disclosure do not limit the specific technology or device form used by the terminal device.

It can be understood that the communication system described in the embodiment of the present disclosure is for the purpose of more clearly illustrating the technical solution of the embodiment of the present disclosure, and does not constitute a limitation on the technical solution provided by the embodiment of the present disclosure. Those skilled in the art can know that with the evolution of the system architecture and the emergence of new service scenarios, the technical solution provided by the embodiment of the present disclosure is also applicable to similar technical problems.

In addition, in order to facilitate understanding of the embodiments of the present disclosure, the following points are explained.

First, in the embodiments of the present disclosure, "used to indicate" can include being used for direct indication and being used for indirect indication. When describing that certain information is used to indicate A, it can include that the information carries A, or it can also include that the information directly indicates A or indirectly indicates A, but it does not necessarily mean that the information carries A.

The information indicated by the information is called the information to be indicated. In the specific implementation process, there are many ways to indicate the information to be indicated. For example, but not limited to, the information to be indicated can be directly indicated, such as the information to be indicated itself or the index of the information to be indicated. The information to be indicated can also be indirectly indicated by indicating other information, where there is an association between the other information and the information to be indicated. It is also possible to indicate only a part of the information to be indicated, while the other parts of the information to be indicated are known or agreed in advance. For example, the indication of specific information can be achieved by using the arrangement order of each piece of information that is pre-agreed (for example, specified by the protocol), thereby reducing the indication overhead to a certain extent.

The information to be indicated can be sent as a whole or as multiple sub-information messages that are sent separately. The transmission periods and/or timings of these sub-information messages can be the same or different. The specific transmission method is not limited in this disclosure. The transmission periods and/or timings of these sub-information messages can be predefined, for example, according to a protocol.

Second, in the embodiments shown below, the first, second, and various numerical numbers are only used for the convenience of description and are not intended to limit the scope of the embodiments of the present disclosure. For example, the first and second can be used as type distinctions in the embodiments of the present disclosure, not as object content distinctions.

Third, the "protocol" involved in the embodiments of the present disclosure may refer to a standard protocol in the communication field, for example, it may include an LTE protocol, a NR protocol, a WLAN protocol, and related protocols in other communication systems, which is not limited in this disclosure.

Fourth, "at least one" means one or more, and "more" means two or more. "And/or" describes the association relationship between associated objects, indicating that three relationships can exist. For example, "A and/or B " can mean: A exists alone, A and B exist simultaneously, and B exists alone, where A and B can be singular or plural. The character "/" generally indicates that the associated objects are in an "or" relationship. "At least one of" or similar expressions refers to any combination of these items, including any combination of single or plural items. For example, "at least one of a, b, and c" can mean: a, or b, or c, or a and b, or a and c, or b and c, or a, b, and c. A, b, and c can each be single or plural.

Fifth, the embodiments of the present disclosure list multiple implementation methods to clearly illustrate the technical solutions of the embodiments of the present disclosure. Of course, those skilled in the art will understand that the multiple implementation methods provided in the embodiments of the present disclosure can be implemented independently, combined with the methods of other embodiments of the embodiments of the present disclosure, or implemented independently or in combination with some methods in other related technologies; the embodiments of the present disclosure are not limited to this.

A terminal device, such as an Internet of Things (IoT) terminal device, cannot simultaneously receive and transmit Global Navigation Satellite System (GNSS) signals and Long Term Evolution (LTE) signals. Furthermore, the GNSS position information (GNSS position fix) obtained by the terminal device is only valid for a limited period of time. After this period, the GNSS position fix becomes outdated.

In this case, the terminal device needs to reacquire the GNSS position information, but because the terminal device does not support simultaneous reception of GNSS and LTE transmission and reception, it can only perform one of them. The terminal device needs to return to the idle state (Idel state) after the GNSS position information expires and perform GNSS measurement.

Therefore, how to enhance GNSS measurements so that terminal devices can perform GNSS measurements without returning to an idle state is an urgent problem that needs to be solved.

Based on this, an embodiment of the present disclosure provides a GNSS measurement method, where a terminal device performs GNSS measurement according to a measurement gap, thereby enhancing GNSS measurement, and the terminal device can perform GNSS measurement according to the measurement gap without returning to an idle state.

Hereinafter, a GNSS measurement method and device provided by the present disclosure are introduced in detail with reference to the accompanying drawings.

Please refer to FIG. 5, which is a flow chart of a GNSS measurement method provided by an embodiment of the present disclosure. As shown in FIG. 5, the method is executed by a terminal device and may include but is not limited to the following steps:
S51: Perform GNSS measurement according to a measurement gap.

In the disclosed embodiment, the terminal device can perform GNSS measurement according to the measurement gap, thereby enhancing the GNSS measurement and enabling the terminal device to perform GNSS measurement without returning to an idle state.

The measurement gap may be a time period, and the terminal device may perform GNSS measurement within the measurement gap.

In a possible implementation, the terminal device performs only the GNSS measurements during the measurement gap, while does not perform other measurements or uplink and downlink data transmission and reception.

It should be noted that the terminal device can determine the measurement gap based on implementation, or can also determine the time interval based on protocol agreement, or can also determine the measurement gap based on the indication of the network-side device. The embodiments of the present disclosure do not impose specific restrictions on this.

In a possible implementation, the start time of the measurement gap may be related to or unrelated to the time when the GNSS position information becomes outdated.

In a possible implementation, the duration of the measurement gap may be related to or unrelated to the duration required for the terminal device to perform GNSS measurement.

In the embodiment of the present disclosure, the terminal device can perform GNSS measurement according to the measurement gap at any time as needed, or the terminal device can also perform GNSS measurement according to the measurement gap when a specified condition is met.

Exemplarily, the specified conditions may be at least one of the following: the terminal device has no other measurements or uplink and downlink data transmission and reception during the measurement gap, reaching a specified time, reception of information sent by the network-side device that triggers the terminal device to perform GNSS measurement according to the measurement gap, GNSS position information becomes outdated, GNSS position information becomes outdated for a specific period of time, and reaching a specific period of time before the GNSS position information becomes outdated, etc.

The GNSS position information being outdated may also be the GNSS validity period timer being expired.

In this embodiment or example, unless there is any contradiction, each step can be independent, arbitrarily combined or exchanged in order, and the optional methods or optional examples can be arbitrarily combined and can be arbitrarily combined with other embodiments or examples.

By implementing the embodiments of the present disclosure, the terminal device performs GNSS measurements according to the measurement gap, thereby enhancing the GNSS measurement and allowing the terminal device to perform GNSS measurements according to the measurement gap without returning to the idle state.

Please refer to FIG. 6, which is a flowchart of another GNSS measurement method provided by an embodiment of the present disclosure. As shown in FIG. 6, the method is executed by a terminal device and may include but is not limited to the following steps:
S61: In response to a specific condition being met, perform GNSS measurement according to a measurement gap.

In an embodiment of the present disclosure, the terminal device may perform GNSS measurement according to a measurement gap when a specific condition is met.

The measurement gap may be a time period, and the terminal device may perform GNSS measurement within the measurement gap.

In a possible implementation, the terminal device performs only the GNSS measurements during the measurement gap, while does not perform other measurements or uplink and downlink data transmission and reception.

It should be noted that the terminal device can determine the measurement gap based on implementation, or can also determine the time interval based on protocol agreement, or can also determine the measurement gap based on the indication of the network-side device. The embodiments of the present disclosure do not impose specific restrictions on this.

In a possible implementation, the start time of the measurement gap may be related to or unrelated to the time when the GNSS position information becomes outdated.

In a possible implementation, the duration of the measurement gap may be related to or unrelated to the duration required for the terminal device to perform GNSS measurement.

In some embodiments, the specific condition includes at least one of:
trigger information sent by a network-side device being received;
remaining GNSS validity period being less than a threshold;
reaching a specified time;
GNSS validity period timer being expired;
reaching a first duration after expiration of the GNSS validity period timer; or
reaching a second duration before expiration of the GNSS validity period timer.

In the embodiment of the present disclosure, the specific condition may be trigger information sent by a network-side device being received.

Based on this, the terminal device can perform GNSS measurement according to the time interval when receiving the trigger information sent by the network-side device. The trigger information can be information instructing the terminal device to perform GNSS measurement according to the time interval.

In the embodiment of the present disclosure, the specific condition may be remaining GNSS validity period being less than a threshold.

Based on this, the terminal device can perform GNSS measurements according to the time interval when the remaining GNSS validity period is less than the threshold.

The terminal device can determine the threshold based on implementation, or can also determine the threshold based on protocol agreement, or can also determine the threshold based on the indication of the network-side device.

In some embodiments, the terminal device determines the threshold according to a protocol agreement; or receives first configuration information sent by a network-side device and determines the threshold according to the first configuration information, where the first configuration information is used to indicate the threshold.

In the embodiment of the present disclosure, the terminal device determines the threshold according to the protocol agreement.

In an embodiment of the present disclosure, the terminal device receives first configuration information sent by the network-side device, where the first configuration information is used to indicate the threshold. Thus, the terminal device can determine the threshold according to the first configuration information.

Based on this, the terminal device can perform GNSS measurements according to the time interval when the remaining GNSS validity period is less than the threshold.

In the embodiment of the present disclosure, the specific condition may be reaching a specified time.

Based on this, the terminal device can perform GNSS measurements according to the time interval when the specified time is reached.

The terminal device can determine the specified time based on implementation, or can also determine the specified time based on protocol agreement, or can also determine the specified time based on the instruction of the network-side device.

In some embodiments, the terminal device receives second configuration information sent by the network-side device, where the second configuration information is used to indicate the specified time.

In an embodiment of the present disclosure, the terminal device receives second configuration information sent by the network-side device, where the second configuration information is used to indicate the specified time. Thus, the terminal device can determine the specified time according to the second configuration information.

Exemplarily, the second configuration information may be a radio resource control (RRC) message, or may also be a media access control element (MAC CE) message.

In some embodiments, the specified time is an absolute time or a relative time relative to when the second configuration information is received.

Exemplarily, the specified time is an absolute time, which may be represented by at least one of a hyper system frame number (Hyper SFN), a system frame number (SFN), and a subframe number.

In the embodiment of the present disclosure, the specified time is a relative time relative to the time when the second configuration information is received, and the unit may be minutes, seconds, milliseconds, subframes, number of slots, number of symbols, etc.

In the embodiment of the present disclosure, the specific condition may be the GNSS validity period timer being expired.

Based on this, the terminal device can perform GNSS measurements according to time intervals when the GNSS validity period timer is expired.

In the embodiment of the present disclosure, the specific condition may be reaching a first duration after expiration of the GNSS validity period timer.

Based on this, the terminal device can perform GNSS measurement according to the time interval when reaching a first duration after expiration of the GNSS validity period timer.

The terminal device can determine the first duration based on implementation, or can also determine the first duration based on protocol agreement, or can also determine the first duration based on the instruction of the network-side device.

In the embodiment of the present disclosure, the specific condition may be reaching a second duration before expiration of the GNSS validity period timer.

Based on this, the terminal device can perform GNSS measurement according to the time interval when reaching a second duration before expiration of the GNSS validity period timer.

The terminal device can determine the second duration based on implementation, or can also determine the second duration based on protocol agreement, or can also determine the second duration based on the instruction of the network-side device.

It should be noted that the above embodiments are not exhaustive and are only illustrations of some embodiments. The above embodiments can be implemented individually or in combination. The above embodiments are only for illustration and are not intended to be a specific limitation on the scope of protection of the embodiments of the present disclosure.

In this embodiment or example, unless there is any contradiction, each step can be independent, arbitrarily combined or exchanged in order, and the optional methods or optional examples can be arbitrarily combined and can be arbitrarily combined with other embodiments or examples.

It should be noted that, in the embodiment of the present disclosure, S61 can be implemented alone or in combination with any other step in the embodiment of the present disclosure, for example, in combination with S51 in the embodiment of the present disclosure, and the embodiment of the present disclosure does not limit this.

By implementing the embodiments of the present disclosure, a terminal device performs GNSS measurements according to a measurement gap in response to a specific condition being met, thereby enhancing GNSS measurements and enabling the terminal device to perform GNSS measurements according to the measurement gap without returning to an idle state.

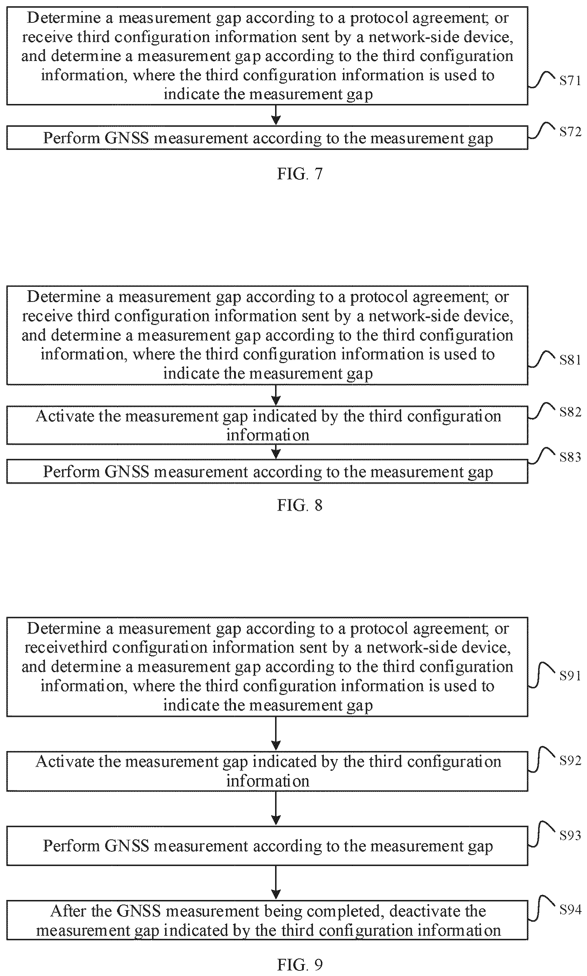

Please refer to FIG. 7, which is a flowchart of another GNSS measurement method provided by an embodiment of the present disclosure. As shown in FIG. 7, the method is executed by a terminal device and may include but is not limited to the following steps:

S71: Determine a measurement gap according to a protocol agreement; or receive third configuration information sent by a network-side device, and determine a measurement gap according to the third configuration information, where the third configuration information is used to indicate the measurement gap.

In the embodiment of the present disclosure, the terminal device may determine the measurement gap according to a protocol agreement.

In some embodiments, the protocol specifies the duration of the measurement gap; and/or the protocol specifies a time offset for the start of the measurement gap.

In the embodiment of the present disclosure, the terminal device may determine the measurement gap according to the duration of the measurement gap agreed upon in the protocol.

In the embodiment of the present disclosure, the terminal device may determine the measurement gap according to the start time offset of the measurement gap agreed upon in the protocol.

In the embodiment of the present disclosure, the terminal device may determine the measurement gap according to the duration of the measurement gap and the start time offset of the measurement gap agreed upon in the protocol.

In one possible implementation, the start time offset of the measurement gap agreed upon by the protocol and the starting position of the measurement gap can be used by the terminal device to determine the time for performing GNSS measurement. The value of the time offset can be 0 or other values, and the unit can be seconds, milliseconds, subframes, slot numbers, symbol numbers, etc.

Exemplarily, the terminal device may perform GNSS measurement during a time period from the start time offset of the measurement gap to the duration of the measurement gap, until the GNSS position information is measured, or until the end of this period.

In an embodiment of the present disclosure, the terminal device may further receive third configuration information sent by the network-side device, where the third configuration information is used to indicate a measurement gap. Thus, the terminal device may determine the measurement gap according to the third configuration information.

In some embodiments, the terminal device receives third configuration information sent by the network-side device, including at least one of:
receiving a first RRC message sent by a network-side device, where the first RRC message includes third configuration information;
receiving a system message sent by a network-side device, where the system message includes third configuration information; or
receiving a first MAC CE message sent by a network-side device, where the first MAC CE message includes third configuration information.

In an embodiment of the present disclosure, the terminal device receiving the third configuration information sent by the network-side device, may receive the first RRC message sent by the network-side device, where the first RRC message includes the third configuration information.

In the embodiment of the present disclosure, the terminal device receiving the third configuration information sent by the network-side device, may receive a system message sent by the network-side device, where the system message includes the third configuration information.

In the embodiment of the present disclosure, the terminal device receiving the third configuration information sent by the network-side device, may receive the first MAC CE message sent by the network-side device, where the first MAC CE message includes the third configuration information.

In some embodiments, the third configuration information includes at least one of the following:
a duration of the measurement gap;
a start time offset of the measurement gap;
a start time of the measurement gap;
a repetition period of the measurement gap; or
a number of repetitions of the measurement gap.

In the embodiment of the present disclosure, the third configuration information includes the duration of the measurement gap.

In a possible implementation, the duration of the measurement gap may be related to or unrelated to the duration required for the terminal device to perform GNSS measurement.

In the embodiment of the present disclosure, the third configuration information includes the tart time offset of the measurement gap.

In a possible implementation, if the third configuration information includes the tart time offset of the measurement gap and the repetition period of the measurement gap, the start time offset of the measurement gap may be smaller than the repetition period of the measurement gap.

Exemplarily, the repetition period of the measurement gap is 80 ms, and the tart time offset of the measurement gap can be set to a value between 0 and 79 ms.

In a possible implementation, the tart time offset of the measurement gap may be a time offset relative to the time when the terminal device determines to perform the GNSS measurement.

The time when the terminal device determines to perform GNSS measurement may be the time when the terminal device receives the third configuration information, or may be the time when the terminal device determines to perform GNSS measurement when a specific condition is met.

The time when the terminal device receives the third configuration information may include a processing delay for the terminal device to process the third configuration information. The processing delay may be a fixed delay agreed upon in the protocol.

In a possible implementation, the tart time offset of the measurement gap may be a time offset relative to the time when the terminal device receives the third configuration information.

The time when the terminal device receives the third configuration information may include a processing delay for the terminal device to process the third configuration information. The processing delay may be a fixed delay agreed upon in the protocol.

In the embodiment of the present disclosure, the third configuration information includes the start time of the measurement gap.

Illustratively, the start time of the measurement gap may be an absolute time, and its unit may be expressed in Hyper SFN, SFN, or SFN+subframe number, Hyper SFN+SFN, Hyper SFN+SFN+subframe number, or subframe number. Of course, its unit may also be relative time, that is, relative time relative to the time when the third configuration information is received, and the unit may be minutes, seconds, milliseconds, subframes, number of slots, number of symbols, etc.

In the embodiment of the present disclosure, the third configuration information includes a repetition period of the measurement gap.

In the embodiment of the present disclosure, the third configuration information includes the number of repetitions of the measurement gap.

It should be noted that the above embodiments are not exhaustive and are only illustrations of some embodiments. The above embodiments can be implemented individually or in combination. The above embodiments are only for illustration and are not intended to be a specific limitation on the scope of protection of the embodiments of the present disclosure.

In some embodiments, when the time offset of the measurement gap is not configured in the third configuration information, the terminal device may determine a default time offset of the measurement gap, for example, the defaulted time offset of the measurement gap is 0, or other values.

In some embodiments, when the duration of the measurement gap is not configured in the third configuration information, the terminal device may determine a default duration of the measurement gap, for example, the default duration of the measurement gap is 1 second, or the default duration of the measurement gap is the duration required for the terminal device to obtain GNSS position information.

In some embodiments, the terminal device sends the time required for the terminal device to obtain GNSS position information to the network-side device, where the time required for the terminal device to obtain GNSS position information is used by the network-side device to determine the duration of the measurement gap.

In an embodiment of the present disclosure, the terminal device may send the time required for the terminal device to obtain GNSS position information to the network-side device, where the time required for the terminal device to obtain GNSS position information is used by the network-side device to determine the duration of the measurement gap.

In an embodiment of the present disclosure, the terminal device may send the time required for the terminal device to obtain GNSS position information to the network-side device, thereby, the terminal device can receive the third configuration information sent by the network-side device, and the third configuration information may include the duration of the measurement gap, and the duration of the measurement gap may be related to the time required for the terminal device to obtain GNSS position information.

Exemplarily, the duration of the measurement gap may be determined by the network-side device based on the time required for the terminal device to obtain GNSS position information reported by the terminal device.

S72: Perform GNSS measurement according to the measurement gap.

The relevant description of S72 can be found in the relevant description of the above embodiment, which will not be repeated here.

In this embodiment or example, unless there is any contradiction, each step can be independent, arbitrarily combined or exchanged in order, and the optional methods or optional examples can be arbitrarily combined and can be arbitrarily combined with other embodiments or examples.

It should be noted that in the embodiment of the present disclosure, S71 and S72 can be implemented separately or in combination with any other steps in the embodiment of the present disclosure, for example, in combination with S51 and/or S61 in the embodiment of the present disclosure, and the embodiment of the present disclosure is not limited to this.

By implementing the embodiments of the present disclosure, a terminal device determines a measurement gap according to a protocol agreement; or receives third configuration information sent by a network-side device, determines the measurement gap based on the third configuration information, where the third configuration information indicates the measurement gap, and performs GNSS measurements based on the measurement gap. This enhances GNSS measurements, allowing the terminal device to perform GNSS measurements based on the measurement gap without returning to an idle state.

Please refer to FIG. 8, which is a flowchart of another GNSS measurement method provided by an embodiment of the present disclosure. As shown in FIG. 8, the method is executed by a terminal device and may include but is not limited to the following steps:
S81: Receive third configuration information sent by a network-side device, and determine a measurement gap according to the third configuration information, where the third configuration information is used to indicate the measurement gap.

For the relevant description of S81, reference can be made to the relevant description in the above embodiment, which will not be repeated here.

For the relevant description of the third configuration information, reference can be made to the relevant description in the above embodiment, which will not be repeated here.

S82: Activate the measurement gap indicated by the third configuration information.

In an embodiment of the present disclosure, the terminal device receives the third configuration information sent by the network-side device and may activate the measurement gap indicated by the third configuration information before performing GNSS measurement according to the measurement gap.

After receiving the third configuration information sent by the network-side device, the terminal device can activate the measurement gap indicated by the third configuration information at any time before performing GNSS measurement according to the measurement gap.

Exemplarily, upon receiving the third configuration information sent by the network-side device and determining that a specific condition is met, the terminal device may activate the measurement gap indicated by the third configuration information.

For the description of the specific condition, reference can be made to the description in the above embodiments, which will not be repeated here.

In some embodiments, the third configuration information is used to indicate a periodic measurement gap.

S83: Perform GNSS measurement according to the measurement gap.

For the relevant description of S83, reference can be made to the relevant description in the above embodiment, which will not be repeated here.

In this embodiment or example, unless there is any contradiction, each step can be independent, arbitrarily combined or exchanged in order, and the optional methods or optional examples can be arbitrarily combined and can be arbitrarily combined with other embodiments or examples.

It should be noted that in the embodiment of the present disclosure, S81 to S83 can be implemented separately or in combination with any other steps in the embodiment of the present disclosure, for example, they can be implemented in combination with S51 and/or S61 and/or S71 and S72 in the embodiment of the present disclosure, and the embodiment of the present disclosure is not limited to this.

By implementing the embodiments of the present disclosure, a terminal device receives third configuration information sent by a network-side device, determines a measurement gap based on the third configuration information, where the third configuration information indicates the measurement gap, activates the measurement gap indicated by the third configuration information, and performs GNSS measurements based on the measurement gap. This enhances GNSS measurements, allowing the terminal device to perform GNSS measurements based on the measurement gap without returning to an idle state.

Please refer to FIG. 9, which is a flowchart of another GNSS measurement method provided by an embodiment of the present disclosure. As shown in FIG. 9, the method is executed by a terminal device and may include but is not limited to the following steps:
S91: Receive third configuration information sent by a network-side device, and determine a measurement gap according to the third configuration information, where the third configuration information is used to indicate the measurement gap.
S92: Activate the measurement gap indicated by the third configuration information.
S93: Perform GNSS measurement according to the measurement gap.

For the relevant descriptions of S91 to S93, reference can be made to the relevant descriptions in the above embodiments, which will not be repeated here.

For the relevant description of the third configuration information, reference can be made to the relevant description in the above embodiment, which will not be repeated here.

S94: After the GNSS measurement being completed, deactivate the measurement gap indicated by the third configuration information.

In the embodiment of the present disclosure, after the GNSS measurement is completed, the terminal device may deactivate the measurement gap indicated by the third configuration information.

In some embodiments, the third configuration information is used to indicate a periodic measurement gap.

In some embodiments, when the third configuration information is used to indicate a periodic measurement gap, the GNSS measurement being completed is the terminal device obtaining the GNSS position information; or, when the third configuration information is used to indicate an aperiodic measurement gap, the GNSS measurement being completed is the duration of the measurement gap being ended.

In the embodiment of the present disclosure, when the third configuration information is used to indicate a periodic measurement gap, the GNSS measurement being completed is the terminal device obtaining the GNSS position information.

In the embodiment of the present disclosure, when the third configuration information is used to indicate an aperiodic measurement gap, the GNSS measurement being completed is the duration of the measurement gap being ended.

In this embodiment or example, unless there is any contradiction, each step can be independent, arbitrarily combined or exchanged in order, and the optional methods or optional examples can be arbitrarily combined and can be arbitrarily combined with other embodiments or examples.

It should be noted that in the embodiments of the present disclosure, S91 to S94 can be implemented separately or in combination with any other steps in the embodiments of the present disclosure, for example, they can be implemented in combination with S51 and/or S61 and/or S71 and S72 and/or S81 and S82 in the embodiments of the present disclosure, and the embodiments of the present disclosure are not limited to this.

By implementing the embodiments of the present disclosure, a terminal device receives third configuration information sent by a network-side device, determines a measurement gap based on the third configuration information, where the third configuration information is used to indicate the measurement gap, activates the measurement gap indicated by the third configuration information, performs GNSS measurement based on the measurement gap, and deactivates the measurement gap indicated by the third configuration information after the GNSS measurement is completed. Thus, GNSS measurement can be enhanced, and the terminal device can perform GNSS measurement based on the measurement gap without returning to an idle state.

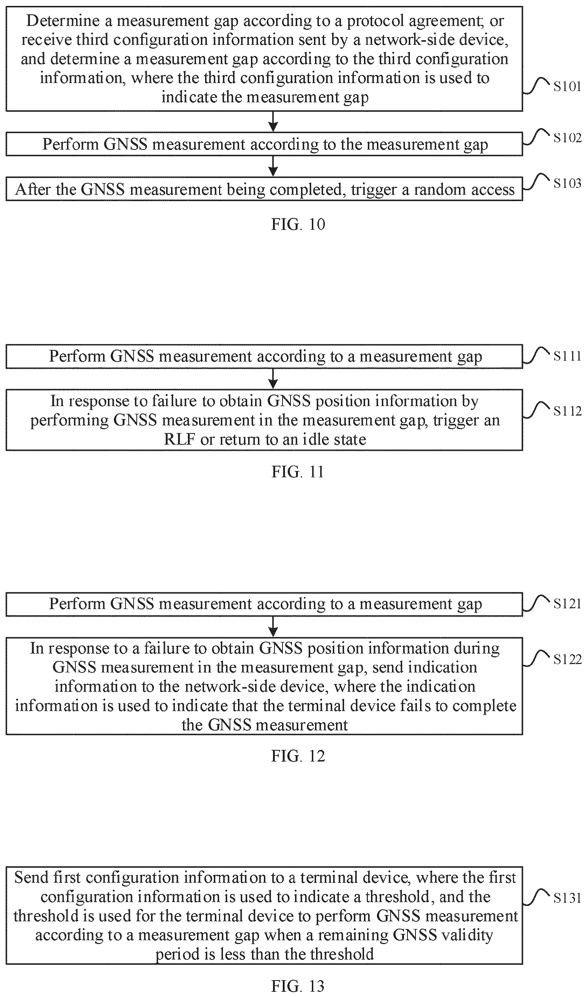

Please refer to FIG. 10, which is a flowchart of another GNSS measurement method provided by an embodiment of the present disclosure. As shown in FIG. 10, the method is executed by a terminal device and may include but is not limited to the following steps:
S101: Receive third configuration information sent by a network-side device, and determine a measurement gap according to the third configuration information, where the third configuration information is used to indicate the measurement gap.
S102: Perform GNSS measurement according to the measurement gap.

The relevant descriptions of S101 and S102 can be found in the relevant descriptions of the above embodiments, which will not be repeated here.

For the relevant description of the third configuration information, reference can be made to the relevant description in the above embodiment, which will not be repeated here.

S103: After the GNSS measurement being completed, trigger a random access.

In the embodiment of the present disclosure, the terminal device may trigger a random access after the GNSS measurement is completed.

In some embodiments, when the third configuration information is used to indicate a periodic measurement gap, the GNSS measurement being completed is the terminal device obtaining the GNSS position information; or, when the third configuration information is used to indicate an aperiodic measurement gap, the GNSS measurement being completed is the duration of the measurement gap being ended.

In the embodiment of the present disclosure, when the third configuration information is used to indicate a periodic measurement gap, the GNSS measurement being completed is the terminal device obtaining the GNSS position information.

In the embodiment of the present disclosure, when the third configuration information is used to indicate an aperiodic measurement gap, the GNSS measurement being completed is the duration of the measurement gap being ended.

In this embodiment or example, unless there is any contradiction, each step can be independent, arbitrarily combined or exchanged in order, and the optional methods or optional examples can be arbitrarily combined and can be arbitrarily combined with other embodiments or examples.

It should be noted that in the embodiments of the present disclosure, S101 to S103 can be implemented separately or in combination with any other steps in the embodiments of the present disclosure, for example, they can be implemented in combination with S51 and/or S61 and/or S71 and S72 and/or S81 and S82 and/or S91 to S93 in the embodiments of the present disclosure, and the embodiments of the present disclosure are not limited to this.

By implementing the embodiments of the present disclosure, a terminal device receives third configuration information sent by a network-side device, determines a measurement gap based on the third configuration information, where the third configuration information indicates the measurement gap, performs GNSS measurements based on the measurement gap, and triggers a random access after the GNSS measurements are completed. This enhances GNSS measurements, allowing the terminal device to perform GNSS measurements based on the measurement gap without returning to an idle state.

Please refer to FIG. 11, which is a flowchart of another GNSS measurement method provided by an embodiment of the present disclosure. As shown in FIG. 11, the method is executed by a terminal device and may include but is not limited to the following steps:
S111: Perform GNSS measurement according to a measurement gap.

For the relevant description of S111, reference can be made to the relevant description in the above embodiment, which will not be repeated here.

S112: In response to failure to obtain GNSS position information by performing GNSS measurement in the measurement gap, trigger an RLF or return to an idle state.

In an embodiment of the present disclosure, if the terminal device fails to obtain GNSS position information during GNSS measurement in a measurement gap, RLF may be triggered, or the terminal device may return to an idle state.

In some embodiments, the terminal device performs GNSS measurements according to the measurement gap when a condition related to the GNSS validity timer is met.

Exemplarily, the condition related to the GNSS validity timer may be that the GNSS validity timer expires, or that the GNSS validity timer reaches a first duration after expiring, or that the GNSS validity timer reaches a second duration before expiring.

In an embodiment of the present disclosure, when the condition related to the GNSS validity timer are met, the terminal device performs GNSS measurement according to the measurement gap, and if the GNSS measurement fails to obtain GNSS position information during the measurement gap, RLF is triggered, or the terminal device can return to the idle state.

In an embodiment of the present disclosure, when the condition related to a GNSS validity period timer is satisfied, the terminal device performs GNSS measurement according to a measurement gap, where the measurement gap may be configured separately by the network-side device.

In this embodiment or example, unless there is any contradiction, each step can be independent, arbitrarily combined or exchanged in order, and the optional methods or optional examples can be arbitrarily combined and can be arbitrarily combined with other embodiments or examples.

It should be noted that in the embodiments of the present disclosure, S111 and S112 can be implemented separately or in combination with any other steps in the embodiments of the present disclosure, for example, they can be implemented in combination with S51 and/or S61 and/or S71 and S72 and/or S81 and S82 and/or S91 to S93 and/or S101 to S103 in the embodiments of the present disclosure, and the embodiments of the present disclosure are not limited to this.

By implementing the embodiments of the present disclosure, a terminal device performs GNSS measurements according to a measurement gap, and in response to a failure to obtain GNSS position information during the GNSS measurement during the measurement gap, triggers an RLF or returns to the idle state. This enhances GNSS measurements, allowing the terminal device to perform GNSS measurements according to the measurement gap without returning to the idle state, and can trigger an RLF or return to the idle state if it fails to obtain GNSS position information.

Please refer to FIG. 12, which is a flow chart of another GNSS measurement method provided by an embodiment of the present disclosure. As shown in FIG. 11, the method is executed by a terminal device and may include but is not limited to the following steps:
S121: Perform GNSS measurement according to a measurement gap.

For the relevant description of S121, reference may be made to the relevant description in the above embodiment, which will not be repeated here.

S122: In response to a failure to obtain GNSS position information during GNSS measurement in the measurement gap, send indication information to the network-side device, where the indication information is used to indicate that the terminal device fails to complete the GNSS measurement.

In an embodiment of the present disclosure, if the terminal device fails to obtain GNSS position information during GNSS measurement in the measurement gap, it can send indication information to the network-side device, where the indication information is used to indicate that the terminal device fails to complete the GNSS measurement.

In one possible implementation, when the measurement gap is aperiodic, if the terminal device fails to obtain GNSS position information during GNSS measurement in the measurement gap, indication information is sent to the network-side device to indicate that the terminal device fails to complete the GNSS measurement.

In some embodiments, the terminal device sending indication information to the network-side device, includes: sending a second RRC message to the network-side device, where the second RRC message includes the indication information; or sending a second MAC CE message to the network-side device, where the second MAC CE message includes the indication information.

In an embodiment of the present disclosure, the terminal device sending the indication information to the network-side device, may be sending a second RRC message to the network-side device, where the second RRC message includes the indication information.

In the embodiment of the present disclosure, the terminal device sending the indication information to the network-side device, may be sending a second MAC CE message to the network-side device, where the second MAC CE message includes the indication information.

Exemplarily, the second MAC CE message may include a special value, and different special values indicate whether the terminal device completes the GNSS measurement.

For example, the terminal device sends a second MAC CE message to the network-side device, and the second MAC CE message indicates a special value of 0, which indicates that the terminal device fails to complete the GNSS measurement.

For example, the terminal device sends a second MAC CE message to the network-side device, and the second MAC CE message indicates a special value of 1, which indicates that the terminal device completes the GNSS measurement.

Of course, the special value may also be other values. The above examples are only for illustration and are not intended to be a specific limitation on the embodiments of the present disclosure.

In some embodiments, in response to the absence of available uplink resources for the terminal device to send the second MAC CE message to the network-side device, the terminal device may trigger a scheduling request (SR).

In an embodiment of the present disclosure, when there are no available uplink resources for the terminal device to send the second MAC CE message to the network-side device and send indication information to the network-side device, the terminal device may trigger a scheduling request (SR).

In this embodiment or example, unless there is any contradiction, each step can be independent, arbitrarily combined or exchanged in order, and the optional methods or optional examples can be arbitrarily combined and can be arbitrarily combined with other embodiments or examples.

It should be noted that, in the embodiments of the present disclosure, S121 and S122 can be implemented separately, or they can be implemented in combination with any other steps in the embodiments of the present disclosure, for example, they can be implemented in combination with S51 and/or S61 and/or S71 and S72 and/or S81 and S82 and/or S91 to S93 and/or S101 to S103 and/or S111 and S112 in the embodiments of the present disclosure, and the embodiments of the present disclosure are not limited to this.

By implementing the embodiments of the present disclosure, a terminal device performs GNSS measurements according to a measurement gap, and in response to a failure to obtain GNSS position information during the GNSS measurement during the measurement gap, sends an indication to a network device, where the indication is used to indicate that the terminal device fails to complete the GNSS measurement. Thus, GNSS measurements can be enhanced, and the terminal device can perform GNSS measurements according to the measurement gap without returning to an idle state. Furthermore, if GNSS position information cannot be obtained, an indication can be sent to the network device indicating that the terminal device fails to complete the GNSS measurement.

Please refer to FIG. 13, which is a flowchart of another GNSS measurement method provided by an embodiment of the present disclosure. As shown in FIG. 13, the method is executed by a network-side device and may include but is not limited to the following steps:
S131: Send first configuration information to a terminal device, where the first configuration information is used to indicate a threshold, and the threshold is used for the terminal device to perform GNSS measurement according to a measurement gap when a remaining GNSS validity period is less than the threshold.

In an embodiment of the present disclosure, the network-side device may send first configuration information to the terminal device, where the first configuration information is used to indicate a threshold.

The threshold is used by the terminal device to perform GNSS measurement according to the measurement gap when the remaining GNSS validity period is less than the threshold.

In this embodiment or example, unless there is any contradiction, each step can be independent, arbitrarily combined or exchanged in order, and the optional methods or optional examples can be arbitrarily combined and can be arbitrarily combined with other embodiments or examples.

By implementing the embodiments of the present disclosure, a network device sends first configuration information to a terminal device, where the first configuration information indicates a threshold. The threshold is used for the terminal device to perform GNSS measurements according to the measurement gap when the remaining GNSS validity period is less than the threshold. Thus, the network device can configure the threshold for the terminal device to determine whether to perform GNSS measurements according to the measurement gap.

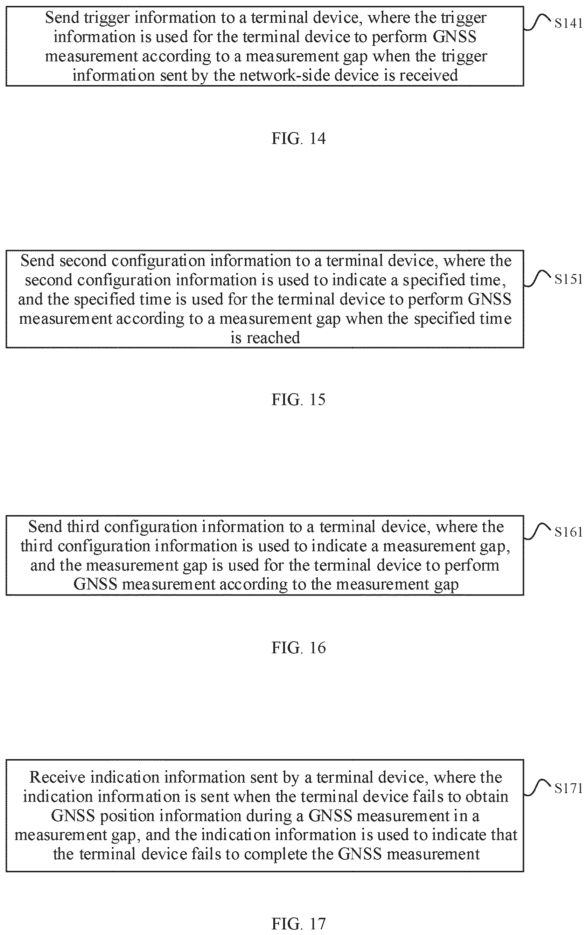

Please refer to FIG. 14, which is a flowchart of another GNSS measurement method provided by an embodiment of the present disclosure. As shown in FIG. 14, the method is executed by a network-side device and may include but is not limited to the following steps:
S141: Send trigger information to a terminal device, where the trigger information is used for the terminal device to perform GNSS measurement according to a measurement gap when the trigger information sent by the network-side device is received.

In the embodiment of the present disclosure, the network-side device can send trigger information to the terminal device.

The trigger information is used by the terminal device to perform GNSS measurement according to the measurement gap when the terminal device receives the trigger information sent by the network-side device.

In this embodiment or example, unless there is any contradiction, each step can be independent, arbitrarily combined or exchanged in order, and the optional methods or optional examples can be arbitrarily combined and can be arbitrarily combined with other embodiments or examples.

By implementing the embodiments of the present disclosure, the network device sends trigger information to the terminal device, where the trigger information is used by the terminal device to perform GNSS measurement according to the measurement gap when the trigger information sent by the network device is received. Thus, the network device can send trigger information to the terminal device to determine whether to perform GNSS measurement according to the measurement gap.

Please refer to FIG. 15, which is a flowchart of another GNSS measurement method provided by an embodiment of the present disclosure. As shown in FIG. 15, the method is executed by a network-side device and may include but is not limited to the following steps:
S151: Send second configuration information to a terminal device, where the second configuration information is used to indicate a specified time, and the specified time is used for the terminal device to perform GNSS measurement according to a measurement gap when the specified time is reached.

In an embodiment of the present disclosure, the network-side device may send second configuration information to the terminal device, where the second configuration information is used to indicate the specified time.

The specified time is used for the terminal device to perform GNSS measurement according to the measurement gap when the specified time is reached.

In this embodiment or example, unless there is any contradiction, each step can be independent, arbitrarily combined or exchanged in order, and the optional methods or optional examples can be arbitrarily combined and can be arbitrarily combined with other embodiments or examples.

By implementing the embodiments of the present disclosure, the network device sends second configuration information to the terminal device, where the second configuration information is used to indicate a specified time. The specified time is used for the terminal device to perform GNSS measurements according to the measurement gap when the specified time is reached. Thus, the network device can configure the terminal device with a specified time for determining whether to perform GNSS measurements according to the measurement gap.

Please refer to FIG. 16, which is a flowchart of another GNSS measurement method provided by an embodiment of the present disclosure. As shown in FIG. 16, the method is executed by a network-side device and may include but is not limited to the following steps:
S161: Send third configuration information to a terminal device, where the third configuration information is used to indicate a measurement gap, and the measurement gap is used for the terminal device to perform GNSS measurement according to the measurement gap.

In an embodiment of the present disclosure, the network-side device may send third configuration information to the terminal device, where the third configuration information is used to indicate a measurement gap.

The measurement gap is used by the terminal device to perform GNSS measurement according to the measurement gap.

In some embodiments, the network-side device sending the third configuration information to the terminal device, includes at least one of the following:
sending a first RRC message to the terminal device, where the first RRC message includes the third configuration information;
sending a system message to the terminal device, where the system message includes the third configuration information;
sending a first MAC CE message to the terminal device, where the first MAC CE message includes the third configuration information.

In an embodiment of the present disclosure, the network-side device sending the third configuration information to the terminal device, may be sending a first RRC message to the terminal device, where the first RRC message includes the third configuration information.

In the embodiment of the present disclosure, the network-side device sending the third configuration information to the terminal device, may be sending a system message to the terminal device, where the system message includes the third configuration information.

In the embodiment of the present disclosure, the network-side device sending the third configuration information to the terminal device, may be sending a first MAC CE message to the terminal device, where the first MAC CE message includes the third configuration information.

In some embodiments, the third configuration information includes at least one of the following:
a duration of the measurement gap;
a start time offset of the measurement gap;
a start time of the measurement gap;
a repetition period of the measurement gap; or
a number of repetitions of the measurement gap.

In the embodiment of the present disclosure, the third configuration information includes the duration of the measurement gap.

In a possible implementation, the duration of the measurement gap may be related to or unrelated to the duration required for the terminal device to perform GNSS measurement.

In the embodiment of the present disclosure, the third configuration information includes the tart time offset of the measurement gap.

In a possible implementation, if the third configuration information includes the tart time offset of the measurement gap and the repetition period of the measurement gap, the start time offset of the measurement gap may be smaller than the repetition period of the measurement gap.

Exemplarily, the repetition period of the measurement gap is 80 ms, and the tart time offset of the measurement gap can be set to a value between 0 and 79 ms.

In a possible implementation, the tart time offset of the measurement gap may be a time offset relative to the time when the terminal device determines to perform the GNSS measurement.

The time when the terminal device determines to perform GNSS measurement may be the time when the terminal device receives the third configuration information, or may be the time when the terminal device determines to perform GNSS measurement when a specific condition is met.

The time when the terminal device receives the third configuration information may include a processing delay for the terminal device to process the third configuration information. The processing delay may be a fixed delay agreed upon in the protocol.

In a possible implementation, the tart time offset of the measurement gap may be a time offset relative to the time when the terminal device receives the third configuration information.

The time when the terminal device receives the third configuration information may include a processing delay for the terminal device to process the third configuration information. The processing delay may be a fixed delay agreed upon in the protocol.

In the embodiment of the present disclosure, the third configuration information includes the start time of the measurement gap.

Illustratively, the start time of the measurement gap may be an absolute time, and its unit may be expressed in Hyper SFN, SFN, or SFN+subframe number, Hyper SFN+SFN, Hyper SFN+SFN+subframe number, or subframe number. Of course, its unit may also be relative time, that is, relative time relative to the time when the third configuration information is received, and the unit may be minutes, seconds, milliseconds, subframes, number of slots, number of symbols, etc.

In the embodiment of the present disclosure, the third configuration information includes a repetition period of the measurement gap.

In the embodiment of the present disclosure, the third configuration information includes the number of repetitions of the measurement gap.

It should be noted that the above embodiments are not exhaustive and are only illustrations of some embodiments. The above embodiments can be implemented individually or in combination. The above embodiments are only for illustration and are not intended to be a specific limitation on the scope of protection of the embodiments of the present disclosure.

In some embodiments, when the time offset of the measurement gap is not configured in the third configuration information, the terminal device may determine a default time offset of the measurement gap, for example, the defaulted time offset of the measurement gap is 0, or other values.

In some embodiments, when the duration of the measurement gap is not configured in the third configuration information, the terminal device may determine a default duration of the measurement gap, for example, the default duration of the measurement gap is 1 second, or the default duration of the measurement gap is the duration required for the terminal device to obtain GNSS position information.

In some embodiments, the network-side device receives the time required for the terminal device to obtain the GNSS position information sent by the terminal device; and determines the duration of the measurement gap based on the time required for the terminal device to obtain the GNSS position information.

In the embodiment of the present disclosure, the network-side device can receive the time required for the terminal device to obtain GNSS position information sent by the terminal device, and determine the duration of the measurement gap based on the time required for the terminal device to obtain GNSS position information.

In an embodiment of the present disclosure, the network-side device may send third configuration information to the terminal device when determining the duration of the measurement gap based on the duration required for the terminal device to obtain GNSS position information. The third configuration information may include the duration of the measurement gap, and the duration of the measurement gap may be related to the duration required for the terminal device to obtain GNSS position information.

Exemplarily, the duration of the measurement gap may be determined by the network-side device based on the time required for the terminal device to obtain GNSS position information reported by the terminal device.

In some embodiments, the duration of the measurement gap is equal to a first parameter*the duration required for the terminal device to obtain the GNSS position information+a second parameter.

In the embodiment of the present disclosure, the duration of the measurement gap is equal to a first parameter*the duration required for the terminal device to obtain the GNSS position information+a second parameter.

In some embodiments, the network-side device determines the first parameter and/or the second parameter according to a protocol agreement.

In the embodiment of the present disclosure, the network-side device may determine the first parameter according to the protocol agreement, and/or determine the second parameter according to the protocol agreement.

In some embodiments, the third configuration information is used to indicate a periodic measurement gap, or is used to indicate an aperiodic measurement gap.

In the embodiment of the present disclosure, the third configuration information may be used to indicate a periodic measurement gap.

In the embodiment of the present disclosure, the third configuration information may be used to indicate an aperiodic measurement gap.

It should be noted that in the embodiment of the present disclosure, S161 can be implemented alone or in combination with any other step in the embodiment of the present disclosure, for example, in combination with S131 and/or S141 and/or S151 in the embodiment of the present disclosure, and the embodiment of the present disclosure is not limited to this.

In this embodiment or example, unless there is any contradiction, each step can be independent, arbitrarily combined or exchanged in order, and the optional methods or optional examples can be arbitrarily combined and can be arbitrarily combined with other embodiments or examples.

By implementing the embodiments of the present disclosure, the network device sends third configuration information to the terminal device, where the third configuration information indicates a measurement gap, which is used by the terminal device to perform GNSS measurements according to the measurement gap. Thus, the network device can configure the measurement gap for the terminal device, thereby enhancing GNSS measurements and enabling the terminal device to perform GNSS measurements according to the measurement gap without returning to an idle state.

Please refer to FIG. 17, which is a flowchart of another GNSS measurement method provided by an embodiment of the present disclosure. As shown in FIG. 17, the method is executed by a network-side device and may include but is not limited to the following steps:
S171: Receive indication information sent by a terminal device, where the indication information is sent when the terminal device fails to obtain GNSS position information during a GNSS measurement in a measurement gap, and the indication information is used to indicate that the terminal device fails to complete the GNSS measurement.

In an embodiment of the present disclosure, a network-side device may receive indication information sent by a terminal device, where the indication information is sent when the terminal device fails to obtain GNSS position information during a GNSS measurement during a measurement gap, and the indication information is used to indicate that the terminal device has not completed the GNSS measurement. Thus, the network-side device may determine that the terminal fails to complete the GNSS measurement.

In some embodiments, the network-side device receiving the indication information sent by the terminal device, includes:
receiving a second RRC message sent by the terminal device, where the second RRC message includes the indication information; or
receiving a second MAC CE message sent by the terminal device, where the second MAC CE message includes the indication information.

In an embodiment of the present disclosure, the network-side device receiving the indication information sent by the terminal device, may be receiving a second RRC message sent by the terminal device, where the second RRC message includes the indication information.

In the embodiment of the present disclosure, the network-side device receiving the indication information sent by the terminal device, may be receiving a second MAC CE message sent by the terminal device, where the second MAC CE message includes the indication information.

Exemplarily, the second MAC CE message may include a special value, and different special values indicate whether the terminal device completes the GNSS measurement.

For example, the network-side device receives the second MAC CE message sent by the terminal device, and the second MAC CE message indicates a special value of 0, which indicates that the terminal device fails to complete the GNSS measurement.

For example, the network-side device receives a second MAC CE message sent by the terminal device, and the second MAC CE message indicates a special value of 1, which indicates that the terminal device completes the GNSS measurement.

Of course, the special value may also be other values. The above examples are only for illustration and are not intended to be a specific limitation on the embodiments of the present disclosure.

It should be noted that in the embodiments of the present disclosure, S171 can be implemented alone or in combination with any other steps in the embodiments of the present disclosure, for example, in combination with S131 and/or S141 and/or S151 and/or S161 in the embodiments of the present disclosure, and the embodiments of the present disclosure are not limited to this.

In this embodiment or example, unless there is any contradiction, each step can be independent, arbitrarily combined or exchanged in order, and the optional methods or optional examples can be arbitrarily combined and can be arbitrarily combined with other embodiments or examples.

By implementing the embodiments of the present disclosure, a network-side device receives indication information sent by a terminal device, where the indication information is sent when the terminal device fails to obtain GNSS position information during a GNSS measurement within a measurement gap, and the indication information is used to indicate that the terminal device fails to complete the GNSS measurement. Thus, the network-side device can determine that the terminal device has failed to complete the GNSS measurement.

To facilitate understanding of the embodiments of the present disclosure, an exemplary embodiment is provided in the present disclosure.

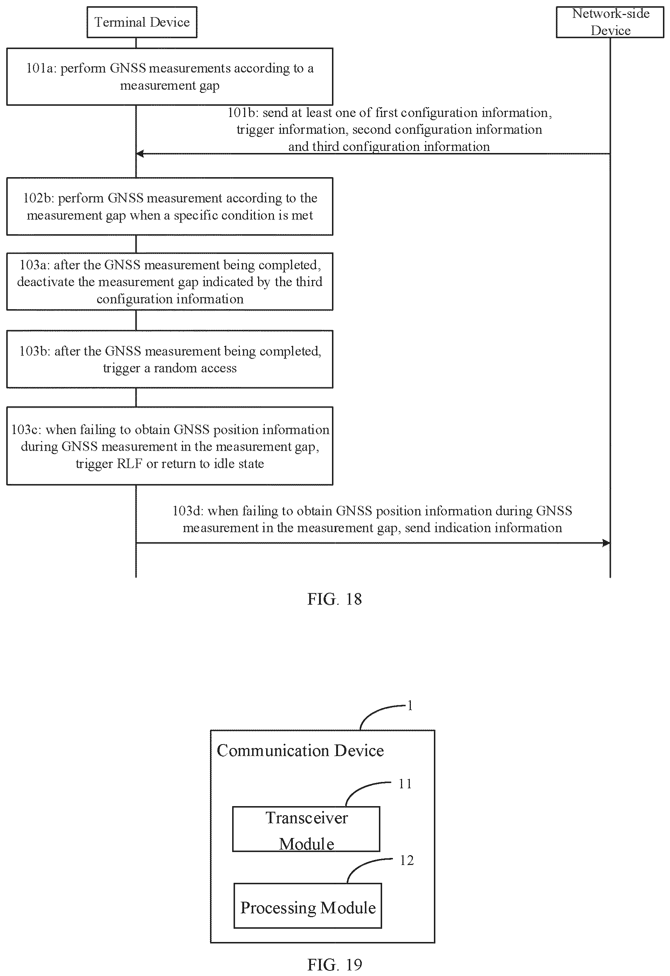

As shown in FIG. 18, in an exemplary embodiment.

In some embodiments, 100a: the terminal device may perform GNSS measurements according to a measurement gap.

It should be noted that the terminal device can determine the measurement gap based on implementation, or can also determine the time interval based on a protocol agreement, or can also determine the measurement gap based on the indication of the network-side device. The embodiments of the present disclosure do not impose specific restrictions on this.

In some embodiments, 101b: the network-side device may send at least one of the first configuration information, the trigger information, the second configuration information and the third configuration information to the terminal device; 102b: the terminal device performs GNSS measurement according to the measurement gap when a specific condition is met.

The network-side device sends first configuration information to the terminal device, where the first configuration information is used to indicate a threshold. The terminal device can determine that a specific condition is met when the remaining GNSS validity period is less than the threshold.

The network-side device sends trigger information to the terminal device, and the terminal device can determine that a specific condition is met when the trigger information sent by the network-side device is received.

The network-side device sends second configuration information to the terminal device, where the second configuration information is used to indicate a specified time. The terminal device can determine that a specific condition is met when the specified time is reached.

The network-side device sends third configuration information to the terminal device, where the third configuration information is used to indicate a measurement gap, and the terminal device can determine the measurement gap based on the third configuration information.

In some embodiments, 103a: after the GNSS measurement being completed, the terminal device deactivates the measurement gap indicated by the third configuration information.

In some embodiments, 103b: the terminal device triggers a random access after the GNSS measurement being completed.

In some embodiments, 103c: when the terminal device fails to obtain GNSS position information during GNSS measurement in the measurement gap, a radio link failure (RLF) is triggered or the terminal device returns to the idle state.

In some embodiments, 103d: when the terminal device fails to obtain GNSS position information during GNSS measurement in the measurement gap, the terminal device sends indication information to the network-side device.

In the embodiment shown in FIG. 18, optionally, in some implementations, 101b and 102b are optional steps, and 101a may be executed when 101b and 102b are not executed.

In the embodiment shown in FIG. 18, optionally, in some implementations, 101a is an optional step, and when 101a is not executed, 101b and 102b may be executed.

In the embodiment shown in FIG. 18, optionally, in some implementations, 103a is an optional step and 103a may not be executed.

In the embodiment shown in FIG. 18, optionally, in some implementations, 103b is an optional step and 103b may not be executed.

In the embodiment shown in FIG. 18, optionally, in some implementations, 103c is an optional step and 103c may not be executed.

In the embodiment shown in FIG. 18, optionally, in some implementations, 103d is an optional step and 103d may not be executed.

For the specific content of each step shown in FIG. 18, reference can be made to the corresponding text descriptions of FIGS. 5 to 17 above, which will not be repeated here.

To facilitate understanding of the embodiments of the present disclosure, the following exemplary embodiments are provided.

In an exemplary embodiment, for IOT terminal devices, some terminal devices cannot support simultaneous GNSS reception and LTE transmission and reception. The validity of the GNSS position information (GNSS position fix) obtained by the terminal device can only be maintained for a period of time. After this time, the GNSS of the terminal device becomes invalid (GNSS outdated). The terminal device needs to re-acquire GNSS. Since the terminal device does not support simultaneous GNSS reception and LTE transmission and reception, only one of them can be performed. The solution of version 17 (R17) is that the terminal device returns to the idle state after GNSS outdated. In the embodiments of the present disclosure, further enhancements are considered. The terminal device performs GNSS measurement through a measurement gap. The terminal device can autonomously trigger the terminal device to perform GNSS measurement.

In an embodiment of the present disclosure, a configuration and use method of a Measurement Gap for GNSS measurement autonomously triggered by a terminal device in an IoT NTN is provided.

In the embodiment of the present disclosure, for a GNSS measurement triggered by the terminal device itself, the terminal device performs GNSS measurement based on the measurement gap.

Exemplarily, the measurement gap is a time period during which the terminal device performs GNSS measurements. Optionally, the terminal device only performs GNSS measurements during the time period without performing other measurements or uplink and downlink transmission and reception.

In some embodiments, the measurement gap may be agreed upon by a protocol or configured by a network-side device to the terminal device.

In one possible implementation, if the measurement gap is agreed upon by a protocol, the protocol may agree on a fixed measurement gap duration and a start time offset for the GNSS measurement.

For example, the time offset for starting a GNSS measurement begins at the time the terminal device triggers the GNSS measurement. The time offset can be 0 or any other value. The Unit can be minutes, seconds, milliseconds, subframes, number of slots, number of symbols, and so on. The terminal device performs GNSS measurements starting from the agreed time offset to the agreed measurement gap duration, until a GNSS positioning fix is measured or the time expires.

In some embodiments, if the measurement gap is configured by a network-side device, the network-side device may carry configuration information of the measurement gap through an RRC message or/system message/MAC CE.

In a possible implementation, the configuration information of the measurement gap may include at least one of the following: a duration of the measurement gap, a start time offset of the measurement gap, a start time of the measurement gap, and a repetition period of the measurement gap/a number of repetitions of the measurement gap.

In one possible implementation, the configured measurement gap duration includes at least one of the following: a coefficient value a and an offset value b. The actual measurement gap duration of the terminal device is a * the GNSS position fix duration reported by the terminal device + b. The values of a and b can also be agreed upon by protocol, for example, a = 1 and b = 0.

For example, if a measurement gap repetition period is configured, the start time offset of the measurement gap is the start time offset within one period. For example, if the period is 80 ms, the start time offset ranges from 0 to 79 ms.

For example, if a measurement gap repetition period is configured, the start time offset of the measurement gap is a time offset relative to the time when the terminal device triggers the GNSS measurement. The time delay for processing the terminal device processing the RRC/MAC CE may be considered in the time for the terminal device to receive the configuration. The processing delay can adopt a fixed delay agreed upon by the system.

Exemplarily, if the repetition period of the measurement gap is not configured, the start time offset of the measurement gap is a time offset relative to the time when the terminal device triggers the GNSS measurement, or relative to the configured start time of the measurement gap.

For example, if the measurement gap repetition period is not configured, the start time offset of the measurement gap is a time offset relative to the time when the terminal device receives the configuration. The time delay for processing the terminal device processing the RRC/MAC CE may be considered in the time for the terminal device to receive the configuration. The processing delay can adopt a fixed delay agreed upon by the system.

For example, the start time can be expressed in absolute time, using Hyper SFN, SFN, SFN+subframe number, Hyper SFN+SFN, Hyper SFN+SFN+subframe number, or subframe number. It can also be relative time, that is, relative to the time when the measurement gap configuration is received, and the unit can be minutes, seconds, milliseconds, subframes, number of slots, number of symbols, etc.

For example, if the measurement gap configuration information does not indicate the time offset, a default value, such as 0, is used; if the measurement gap configuration information does not indicate the measurement gap duration, a default value, such as 1 second, is used; or the GNSS validity duration reported by the terminal device is agreed upon.

In some embodiments, the condition (specific condition) for the terminal device to trigger GNSS measurement includes at least one of the following:
the remaining GNSS validity duration being less than the threshold;
the current time reaching the time specified by the network-side device;
the GNSS validity duration timer of the terminal device being expired; or
the expiring time of the GNSS validity duration timer of the terminal device +/delta-t; where delta-t is agreed upon by a protocol.

In some embodiments, the threshold is configured by a network-side device or agreed upon by the system.

In some embodiments, the time specified by the network-side device can be configured through RRC or MAC CE. The specified time can be an absolute time or a relative time.

In a possible implementation, the absolute time may be represented by Hyper SFN, SFN, or SFN+subframe number, Hyper SFN+SFN, Hyper SFN+SFN+subframe number, or subframe number.

In a possible implementation, the relative time may be relative to the time when the configuration message is received, and the unit may be minutes, seconds, milliseconds, subframes, number of slots, number of symbols, etc.

In some embodiments, for GNSS measurement caused by the expiration of the GNSS validity duration timer of the terminal device, if the terminal device fails to measure the GNSS within the measurement duration, the terminal device triggers an RLF or returns to an Idle state.

In a possible implementation, the network-side device may separately configure a measurement gap for a GNSS measurement caused by a GNSS validity duration timer expiration.

Exemplarily, the measurement gap configuration refers to the above configuration.

In some embodiments, after the terminal device triggers GNSS measurement, the terminal device activates the measurement gap configured by RRC/MAC CE.

In a possible implementation, the measurement gap is configured as a periodic measurement gap.

In some embodiments, after the terminal device completes the GNSS measurement, the terminal device deactivates the measurement gap configured by the RRC/MAC CE.

For example, for a periodic measurement gap, the completion of the GNSS measurement refers to the terminal device obtaining a GNSS position fix. For an aperiodic measurement gap, the completion of the GNSS measurement refers to the end of the current measurement gap duration.

In a possible implementation, the measurement gap is configured as a periodic measurement gap.

In some embodiments, after the terminal device completes the GNSS measurement, the terminal device triggers a random access.

In some embodiments, for an aperiodic measurement gap configuration, if the terminal device fails to obtain a GNSS position fix during the measurement gap, the terminal device sends an indication information to the network device.

In a possible implementation manner, the indication information may be in the form of an RRC message or a MAC CE.

Exemplarily, if the terminal device has no available uplink resources to send the MAC CE, the terminal device triggers an SR.

For example, if a MAC CE is used, the MAC CE may use a GNSS validity duration MAC CE and indicate that the terminal device fails to complete the GNSS measurement by reporting a special value, such as 0, -1, etc.

In some embodiments, for the configuration of the measurement gap of the GNSS measurement triggered by the terminal device itself and the configuration of the measurement gap of the GNSS measurement triggered by the network-side device, the same RRC/MAC CE measurement gap configuration is reused, or are configured separately.

It can be understood that, in the above exemplary embodiments, the detailed description of each method step has been described in detail in the methods of FIGS. 5 to 17 above. For details, reference can be made to the relevant description in the above embodiments, and no further details will be given here.

In the above embodiments provided by the present disclosure, the methods provided by the embodiments of the present disclosure are introduced from the perspectives of network-side devices and terminal devices respectively.

Please refer to FIG. 19, which is a schematic diagram of the structure of a communication device 1 provided in an embodiment of the present disclosure. The communication device 1 shown in FIG. 19 may include a transceiver module 11 and a processing module. The transceiver module may include a sending module and/or a receiving module. The sending module is used to implement a sending function, and the receiving module is used to implement a receiving function. The transceiver module can implement a sending function and/or a receiving function.

The communication device 1 may be a terminal device, a device within a terminal device, or a device that can be used in conjunction with a terminal device. Alternatively, the communication device 1 may be a network-side device, a device within a network-side device, or a device that can be used in conjunction with a network-side device.

The communication device 1 is configured on the terminal device side:
the device includes: a processing module 12.

The processing module 12 is configured to perform GNSS measurement according to a measurement gap.

In some embodiments, the processing module 12 is further configured to perform GNSS measurements according to the measurement gap in response to a specific condition being met.

In some embodiments, the specific condition includes at least one of:
trigger information sent by a network-side device being received;
remaining GNSS validity period being less than a threshold;
reaching a specified time;
GNSS validity period timer being expired;
reaching a first duration after expiration of the GNSS validity period timer; or
reaching a second duration before expiration the GNSS validity period timer.

In some embodiments, the processing module 12 is further configured to determine the threshold according to a protocol agreement; or
the transceiver module 11 is configured to receive first configuration information sent by the network-side device, and determine the threshold according to the first configuration information, where the first configuration information is used to indicate the threshold.

In some embodiments, the transceiver module 11 is further configured to receive second configuration information sent by the network-side device, where the second configuration information is used to indicate a specified time.

In some embodiments, the specified time is an absolute time or a relative time relative to reception of the second configuration information.

In some embodiments, the processing module 12 is further configured to determine the first duration or the second duration according to a protocol agreement.

In some embodiments, the processing module 12 is further configured to determine a measurement gap according to a protocol agreement; or
the transceiver module 11 is further configured to receive third configuration information sent by the network-side device, and determine the measurement gap according to the third configuration information, where the third configuration information is used to indicate the measurement gap.

In some embodiments, the protocol specifies the duration of the measurement gap; and/or the protocol specifies a start time offset of the measurement gap.

In some embodiments, the transceiver module 11 is further configured to perform at least one of:
receiving a first radio resource control (RRC) message sent by the network-side device, where the first RRC message includes the third configuration information;
receiving a system message sent by the network-side device, where the system message includes the third configuration information;
receiving a first media access control layer control element (MAC CE) message sent by a network-side device, where the first MAC CE message includes the third configuration information.

In some embodiments, the third configuration information includes at least one of:
a duration of the measurement gap;
a start time offset of the measurement gap;
a start time of the measurement gap;
a repetition period of the measurement gap; or
a number of repetitions of the measurement gap.

In some embodiments, the transceiver module 11 is further configured to send the time required for the terminal device to obtain GNSS position information to the network-side device, where the time required for the terminal device to obtain GNSS position information is used by the network-side device to determine the duration of the measurement gap.

In some embodiments, the processing module 12 is further configured to activate the measurement gap indicated by the third configuration information.

In some embodiments, the processing module 12 is further configured to deactivate the measurement gap indicated by the third configuration information after the GNSS measurement is completed.

In some embodiments, the third configuration information is used to indicate a periodic measurement gap.

In some embodiments, the processing module 12 is further configured to trigger random access after the GNSS measurement is completed.

In some embodiments, when the third configuration information is used to indicate a periodic measurement gap, the GNSS measurement being completed is the terminal device obtaining the GNSS position information; or, when the third configuration information is used to indicate an aperiodic measurement gap, the GNSS measurement being completed is the duration of the measurement gap being expired.

In some embodiments, the processing module 12 is further configured to trigger a radio link failure (RLF) or return to the idle state in response to failure to obtain GNSS position information during GNSS measurement in the measurement gap.

In some embodiments, the transceiver module 11 is further configured to send an indication information to the network-side device in response to failure to obtain GNSS position information during GNSS measurement in the measurement gap, where the indication information is used to indicate that the terminal device fails to complete the GNSS measurement.

In some embodiments, the transceiver module 11 is further configured to send a second RRC message to the network-side device, where the second RRC message includes the indication information; or send a second MAC CE message to the network-side device, where the second MAC CE message includes the indication information.

In some embodiments, the processing module 12 is further configured to trigger a scheduling request (SR) in response to the absence of available uplink resources for sending the second MAC CE message to the network-side device.

The communication device 1 is configured on the network-side device side:
the device includes: a transceiver module 11.

The transceiver module 11 is configured to: send first configuration information to a terminal device, where the first configuration information is used to indicate a threshold, and the threshold is used for the terminal device to perform GNSS measurement according to a measurement gap when the remaining GNSS validity period is less than the threshold;
send trigger information to the terminal device, where the trigger information is used for the terminal device to perform GNSS measurement according to the measurement gap when the trigger information sent by the network-side device is received;
send second configuration information to the terminal device, where the second configuration information is used to indicate a specified time, and the specified time is used for the terminal device to perform GNSS measurement according to the measurement gap when the specified time is reached; or
send third configuration information to the terminal device, where the third configuration information is used to indicate a measurement gap, and the measurement gap is used by the terminal device to perform GNSS measurement according to the measurement gap.

In some embodiments, the transceiver module 11 is further configured to perform at least one of:
sending a first RRC message to the terminal device, where the first RRC message includes the third configuration information;
sending a system message to the terminal device, where the system message includes the third configuration information;
sending a first MAC CE message to the terminal device, where the first MAC CE message includes the third configuration information.

In some embodiments, the third configuration information includes at least one of:
a duration of the measurement gap;
a start time offset of the measurement gap;
a start time of the measurement gap;
a repetition period of the measurement gap; or
a number of repetitions of the measurement gap.

In some embodiments, the transceiver module 11 is further configured to receive a time duration required for the terminal device to obtain the GNSS position information, which is sent by the terminal device.

In some embodiments, the processing module 12 is configured to determine the duration of the measurement gap according to the duration required for the terminal device to obtain the GNSS position information.

In some embodiments, the duration of the measurement gap is equal to a parameter*the duration required for the terminal device to obtain the GNSS position information+a second parameter.

In some embodiments, the processing module 12 is further configured to determine the first parameter and/or the second parameter according to a protocol agreement.

In some embodiments, the third configuration information is used to indicate a periodic measurement gap, or is used to indicate an aperiodic measurement gap.

In some embodiments, the transceiver module 11 is further configured to receive indication information sent by the terminal device, where the indication information is sent when the terminal device fails to obtain GNSS position information during GNSS measurement in the measurement gap, and the indication information is used to indicate that the terminal device fails to complete the GNSS measurement.

In some embodiments, the transceiver module 11 is further configured to receive a second RRC message sent by the terminal device, where the second RRC message includes the indication information; or receive a second MAC CE message sent by the terminal device, where the second MAC CE message includes the indication information.

Regarding the communication device 1 in the above embodiment, the specific manner in which each module performs operations has been described in detail in the embodiment of the method, and will not be elaborated on here.

The communication device 1 provided in the above embodiments of the present disclosure achieves the same or similar beneficial effects as the GNSS measurement methods provided in some of the above embodiments, and will not be described in detail here.

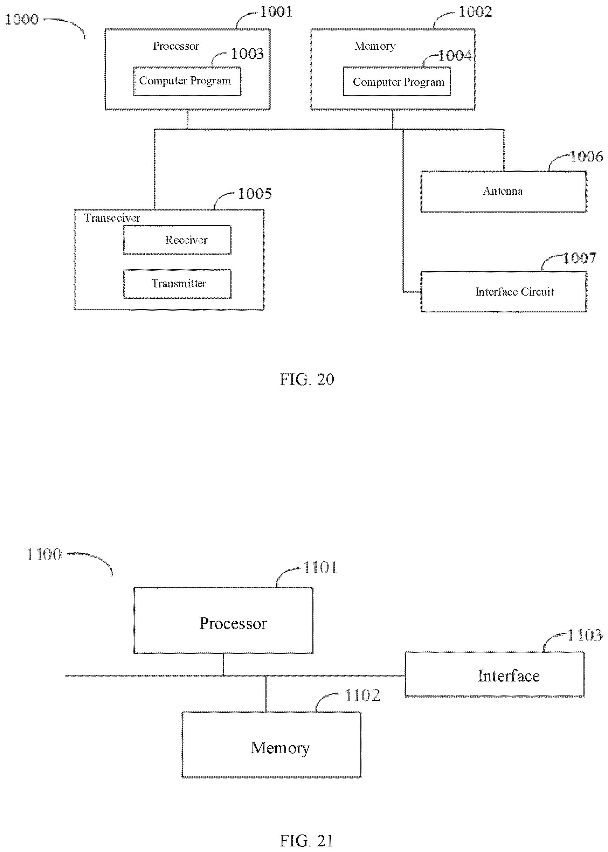

Please refer to FIG. 20, which is a schematic structural diagram of another communication device 1000 provided by an embodiment of the present disclosure. The communication device 1000 may be an terminal device, or may be a network-side device, or may be a chip, a chip system, a processor or the like that supports the terminal device to implement the above method, or may be a chip, a chip system, a processor or the like that supports the network-side device to implement the above method. The communication device 1000 can be used to implement the method described in the above method embodiments. For details, reference may be made to the description in the above method embodiments.

The communication device 1000 may include one or more processors 1001. The processor 1001 may be a general-purpose processor or a dedicated processor, or the like. For example, the processor 1001 may be a baseband processor or a central processing unit. The baseband processor can be used to process communication protocols and communication data. The central processor can be used to control the communication devices (such as network-side device, baseband chips, terminal devices, terminal device chips, DU or CU, or the like), execute computer programs, and process data for the computer programs.

Optionally, the communication device 1000 may also include one or more memories 1002, on which a computer program 1004 may be stored. The memory 1002 executes the computer program 1004, so that the communication device 1000 performs the method described in the above method embodiments. Optionally, the memory 1002 may also store data. The communication device 1000 and the memory 1002 can be provided separately or integrated together.

Optionally, the communication device 1000 may also include a transceiver 1005 and an antenna 1006. The transceiver 1005 may be referred to as a transceiver unit, a transceiver, a transceiver circuit, or the like, and is used to implement transceiver functions. The transceiver 1005 may include a receiver and a transmitter. The receiver may be referred to as a receiver or a receiving circuit, or the like, and is used to implement the receiving function; and the transmitter may be referred to as a transmitter, a transmitting circuit, or the like, and is used to implement the transmitting function.

Optionally, the communication device 1000 may also include one or more interface circuits 1007. The interface circuit 1007 is used to receive code instructions and transmit the code instructions to the processor 1001. The processor 1001 executes the code instructions to cause the communication device 1000 to perform the method described in the above method embodiments.

The communication device 1000 is a terminal device: the processor 1001 is used to execute S51 in FIG. 5; S61 in FIG. 6; S71 and S72 in FIG. 7; S81, S82 and S83 in FIG. 8; S91, S92 and S93 in FIG. 9; S101, S102 and S103 in FIG. 10; S111 and S112 in FIG. 11; S121 in FIG. 12; and the transceiver 1005 is used to execute S71 in FIG. 7; S81 in FIG. 8; S91 in FIG. 9; S101 in FIG. 10; and S122 in FIG. 12.

The communication device 1000 is a network-side device: the transceiver 1005 is used to execute S131 in FIG. 13; S141 in FIG. 14; S151 in FIG. 15; S161 in FIG. 16; and S171 in FIG. 17.

In one implementation, the processor 1001 may include a transceiver for implementing receiving and transmitting functions. For example, the transceiver may be a transceiver circuit, an interface, or an interface circuit. The transceiver circuits, interfaces or interface circuits used to implement the receiving and transmitting functions can be separate or integrated together. The above-mentioned transceiver circuit, interface or interface circuit can be used for reading and writing codes/data, or the above-mentioned transceiver circuit, interface or interface circuit can be used for signal transmission or transfer.

In one implementation, the processor 1001 may be stored with a computer program 1003, and the computer program 1003 is executed by the processor 1001, causing the communication device 1000 to perform the method described in the above method embodiments. The computer program 1003 may be solidified in the processor 1001, in which case the processor 1001 may be implemented by hardware.

In one implementation, the communication device 1000 may include a circuit, and the circuit may implement the functions of sending or receiving or communicating in the foregoing method embodiments. The processors and transceivers described in this disclosure may be implemented on an integrated circuit (IC), an analog IC, a radio frequency integrated circuit (RFIC), a mixed signal IC, an application specific integrated circuit (ASIC), a printed circuit boards (PCB), an electronic device, and the like. The processor and transceiver can also be manufactured using various IC process technologies, such as complementary metal oxide semiconductor (CMOS), N-type metal oxide semiconductor (nMetal-oxide- semiconductor, NMOS), P-type metal oxide semiconductor (positive channel metal oxide semiconductor, PMOS), bipolar junction transistor (BJT), bipolar CMOS (BiCMOS), silicon germanium (SiGe), gallium arsenide (GaAs), and the like.

The communication device described in the above embodiments may be a terminal device or a network-side device, but the scope of the communication device described in this disclosure is not limited thereto, and the structure of the communication device may not be limited by FIG. 20. The communication device may be a stand-alone device or may be part of a larger device. For example, the communication device may be:
(1) a stand-alone integrated circuit IC, or chip, or chip system or subsystem;
(2) a set of one or more ICs. Optionally, the IC set may also include storage components for storing data and computer programs;
(3) an ASIC, such as a modem;
(4) a module that can be embedded in another device;
(5) a receiver, a terminal device, an intelligent terminal device, a cellular phone, a wireless device, a handheld device, a mobile unit, a vehicle-mounted device, a network-side device, a cloud device, an artificial intelligence device, and the like;
(6) others, etc.

For the case where the communication device may be a chip or a chip system, please refer to FIG. 21, which is a structural diagram of a chip provided in an embodiment of the present disclosure.

The chip 1100 includes a processor 1101 and an interface 1103. The processor 1101 may include one or more processors, and the interface 1103 may include multiple interfaces.

For the case where the chip is used to implement the functions of the terminal device in the embodiment of the present disclosure:
the interface 1103 is used to receive code instructions and transmit them to the processor.

The processors 1101 is used to execute the code instructions to perform the GNSS measurement method as described in some of the above embodiments.

For the case where the chip is used to implement the functions of the network-side device in the embodiment of the present disclosure:
the interface 1103 is used to receive code instructions and transmit them to the processor.

The processors 1101 is used to execute the code instructions to perform the GNSS measurement method as described in some of the above embodiments.

Optionally, the chip 1100 also includes a memory 1102, which is used to store necessary computer programs and data.

Those skilled in the art can also understand that the various illustrative logical blocks and steps listed in the embodiments of the present disclosure can be implemented by electronic hardware, computer software, or a combination of both. Whether such functionality is implemented in hardware or software depends on the specific application and overall system design requirements. Those skilled in the art can use various methods to implement the described functions for each specific application, but such implementation should not be understood as exceeding the scope of protection of the embodiments of the present disclosure.

Embodiments of the present disclosure also provide a GNSS measurement system. The system includes a communication device as a terminal device and a communication device as a network-side device in the embodiment of FIG. 19, or the system includes a communication device as a terminal device and a communication device as a network-side device in the embodiment of FIG. 20.

The present disclosure also provides a readable storage medium on which instructions are stored. When the instructions are executed by a computer, the functions of any of the above method embodiments are implemented.

The present disclosure also provides a computer program product, which, when been executed by a computer, implements the functions of any of the above method embodiments.

In the above embodiments, it may be implemented in whole or in part by software, hardware, firmware, or any combination thereof. When implemented by software, it may be implemented in whole or in part in the form of a computer program product. The computer program product includes one or more computer programs. When the computer program is loaded and executed on a computer, the processes or functions described in accordance with the embodiments of the present disclosure are generated in whole or in part. The computer may be a general-purpose computer, a dedicated computer, a computer network, or other programmable device. The computer program may be stored in a computer-readable storage medium, or been transferred from one computer-readable storage medium to another, for example, the computer program may be transferred from a website, computer, server, or data center to another website, computer, server or data center via wired (such as coaxial cable, optical fiber, digital subscriber line (DSL)) or wireless (such as infrared, wireless, microwave, or the like) means. The computer-readable storage medium may be any available medium that can be accessed by a computer, or a data storage device such as an integrated server, data center, or the like, that includes one or more available media. The available media may be magnetic media (e.g., floppy disks, hard disks, magnetic tapes), optical media (e.g., high-density digital video discs (DVD)), or semiconductor media (e.g., solid state disks, SSD)) or the like.

Those of ordinary skill in the art can understand that the first, second, and other numerical numbers involved in this disclosure are only distinctions made for convenience of description and are not used to limit the scope of the embodiments of the disclosure, nor to indicate the order.

At least one in the present disclosure can also be described as one or more, and the plurality can be two, three, four or more, which is not limited in the present disclosure. In the embodiment of the present disclosure, for one type of technical feature, "first", "second", "third", "A", "B", "C" and "D", or the like are used to distinguish the technical features in the type of technical feature, and the technical features described with "first", "second", "third", "A", "B", "C" and "D" are in no order of precedence or order of size.

Depending on the context, the words "if" and "in case of" as used herein may be interpreted as "when" or "while" or "in response to a determination."

The corresponding relationships shown in each table in this disclosure can be configured or predefined. The values of the information in each table are only examples and can be configured as other values, which is not limited by this disclosure. When configuring the correspondence between information and each parameter, it is not necessarily required to configure all the correspondences shown in each table. For example, in the table in this disclosure, the corresponding relationships shown in some rows may not be configured. For another example, appropriate deformation adjustments can be made based on the above table, such as splitting, merging, or the like. The names of the parameters shown in the titles of the above tables may also be other names understandable by the communication device, and the values or expressions of the parameters may also be other values or expressions understandable by the communication device. When implementing the above tables, other data structures can also be used, such as arrays, queues, containers, stacks, linear lists, pointers, linked lists, trees, graphs, structures, classes, heaps, hash tables, or the like.

Predefinition in this disclosure may be understood as definition, pre-definition, storage, pre-storage, pre-negotiation, pre-configuration, firming, or pre-burning.

Those of ordinary skill in the art will appreciate that the units and algorithm steps of each example described in conjunction with the embodiments disclosed herein can be implemented with electronic hardware, or a combination of computer software and electronic hardware. Whether these functions are implemented in hardware or software depends on the specific application and design restrictions of the technical solution. Those skilled in the art may implement the described functions using different methods for each specific application, but such implementations should not be considered to be beyond the scope of this disclosure.

Those skilled in the art can clearly understand that for the convenience and simplicity of description, the specific operating processes of the systems, devices and units described above can be referred to the corresponding processes in the foregoing method embodiments, which will not be described again here.

The above are only specific embodiments of the present disclosure, but the protection scope of the present disclosure is not limited thereto. Any changes or substitutions easily conceivable to those skilled in the art within the technical scope disclosed in the present disclosure should be covered by the protection scope of this disclosure. Therefore, the protection scope of the present disclosure should be subject to the protection scope of the claims.

## Claims

1. A method for global navigation satellite system (GNSS) measurement, performed by a terminal device and comprising:
performing the GNSS measurement based on a measurement gap.

2. The method according to claim 1, wherein performing the GNSS measurement according to the measurement gap comprises:
performing the GNSS measurement according to the measurement gap in response to a specific condition being met;
wherein the specific condition comprises at least one of:
trigger information sent by a network-side device being received;
remaining GNSS validity period being less than a threshold;
reaching a specified time;
GNSS validity period timer being expired;
reaching a first duration after expiration of the GNSS validity period timer; or
reaching a second duration before expiration the GNSS validity period timer;
wherein the first duration and the second duration are agreed upon in a protocol.

3. The method according to claim 2, further comprising:
determining the threshold according to the protocol; or
receiving first configuration information sent by the network-side device, and determining the threshold according to the first configuration information, wherein the first configuration information is used to indicate the threshold.

4. The method according to claim 2 or 3, further comprising:
receiving second configuration information sent by the network-side device, wherein the second configuration information is used to indicate the specified time.

5. The method according to any one of claims 1 to 4, wherein the method comprises:
determining the measurement gap according to the protocol; or
receiving third configuration information sent by a network-side device, and determining the measurement gap according to the third configuration information, wherein the third configuration information is used to indicate the measurement gap.

6. The method according to claim 5, wherein the protocol specifies a duration of the measurement gap; and/or the protocol specifies a time offset for a start of the measurement gap.

7. The method according to claim 5, wherein receiving the third configuration information sent by the network-side device comprises at least one of:
receiving a first radio resource control (RRC) message sent by the network-side device, wherein the first RRC message comprises the third configuration information;
receiving a system message sent by the network-side device, wherein the system message comprises the third configuration information; or
receiving a first media access control layer control element (MAC CE) message sent by the network-side device, wherein the first MAC CE message comprises the third configuration information.

8. The method according to any one of claims 5 to 7, wherein the third configuration information comprises at least one of:
a duration of the measurement gap;
a start time offset of the measurement gap;
a start time of the measurement gap;
a repetition period of the measurement gap; or
a number of repetitions of the measurement gap.

9. The method according to claim 8, further comprising:
sending to the network-side device a duration required for the terminal device to obtain the GNSS position information, wherein the duration required for the terminal device to obtain the GNSS position information is used for the network-side device to determine the duration of the measurement gap.

10. The method according to any one of claims 5 to 9, wherein before performing the GNSS measurement according to the measurement gap, the method further comprises:
activating the measurement gap indicated by the third configuration information.

11. The method according to any one of claims 5 to 10, further comprising:
deactivating the measurement gap indicated by the third configuration information after the GNSS measurement being completed.

12. The method according to claim 10 or 11, wherein the third configuration information is used to indicate a periodic measurement gap.

13. The method according to any one of claims 5 to 12, further comprising:
triggering a random access after the GNSS measurement being completed.

14. The method according to claim 11 or 13, wherein, when the third configuration information is used to indicate the periodic measurement gap, the GNSS measurement is completed when the terminal device obtains GNSS position information;
or,
when the third configuration information is used to indicate an aperiodic measurement gap, the GNSS measurement is completed when the duration of the measurement gap ends.

15. The method according to any one of claims 1 to 14, further comprising:
in response to failure to obtain GNSS position information through the GNSS measurement in the measurement gap, triggering a radio link failure (RLF) or returning to an idle state.

16. The method according to any one of claims 1 to 14, further comprising:
in response to failure to obtain GNSS position information through the GNSS measurement in the measurement gap, sending an indication information to a network-side device, wherein the indication information is used to indicate that the terminal device fails to complete the GNSS measurement.

17. The method according to claim 16, wherein sending the instruction information to the network-side device comprises:
sending a second RRC message to the network-side device, wherein the second RRC message comprises the indication information; or
sending a second MAC CE message to the network-side device, wherein the second MAC CE message comprises the indication information.

18. The method according to claim 17, further comprising:
in response to absence of available uplink resources for sending the second MAC CE message to the network-side device, triggering a scheduling request (SR).

19. A method for global navigation satellite system (GNSS) measurement, performed by a network-side device and comprising at least one of:
sending first configuration information to a terminal device, wherein the first configuration information is used to indicate a threshold, and the threshold is used for the terminal device to perform the GNSS measurement according to a measurement gap when satisfying a remaining GNSS validity period being less than the threshold value;
sending trigger information to the terminal device, wherein the trigger information is used for the terminal device to perform the GNSS measurement according to the measurement gap when satisfying the trigger information sent by the network side device being received;
sending second configuration information to the terminal device, wherein the second configuration information is used to indicate a specified time, and the specified time is used for the terminal device to perform GNSS measurement according to the measurement gap when satisfying the specified time being reached; or
sending third configuration information to the terminal device, wherein the third configuration information is used to indicate the measurement gap, and the measurement gap is used by the terminal device to perform GNSS measurement according to the measurement gap.

20. The method according to claim 19, wherein sending the third configuration information to the terminal device comprises at least one of:
sending a first RRC message to the terminal device, wherein the first RRC message comprises the third configuration information;
sending a system message to the terminal device, wherein the system message comprises the third configuration information; or
send a first MAC CE message to the terminal device, wherein the first MAC CE message comprises the third configuration information.

21. The method according to claim 19 or 20, wherein the third configuration information comprises at least one of:
a duration of the measurement gap;
a start time offset of the measurement gap;
a start time of the measurement gap;
a repetition period of the measurement gap; or
a number of repetitions of the measurement gap.

22. The method according to claim 21, further comprising:
receiving a duration required for the terminal device to obtain GNSS position information sent by the terminal device; and
determining the duration of the measurement gap based on the duration required for the terminal device to obtain the GNSS position information.

23. The method according to claim 22, wherein the duration of the measurement gap is equal to: a first parameter * the duration required for the terminal device to obtain the GNSS position information + a second parameter;
wherein the first parameter and/or the second parameter are agreed upon by a protocol.

24. The method according to any one of claims 19 to 23, further comprising:
receiving indication information sent by the terminal device, wherein the indication information is sent by the terminal device when the terminal device fails to obtain GNSS position information through the GNSS measurement in the measurement gap, and the indication information is used to indicate that the terminal device fails to complete the GNSS measurement.

25. The method according to claim 24, wherein the receiving the indication information sent by the terminal device comprises:
receiving a second RRC message sent by the terminal device, wherein the second RRC message comprises the indication information; or
receiving a second MAC CE message sent by the terminal device, wherein the second MAC CE message comprises the indication information.

26. A communication device, comprising:
a processing module, configured to perform global navigation satellite system (GNSS) measurement according to a measurement gap.

27. A communication device, comprising:
a transceiver module, configured to perform at least one of:
send first configuration information to a terminal device, wherein the first configuration information is used to indicate a threshold, and the threshold is used for the terminal device to perform the GNSS measurement according to a measurement gap when satisfying a remaining GNSS validity period being less than the threshold value;
send trigger information to the terminal device, wherein the trigger information is used for the terminal device to perform the GNSS measurement according to the measurement gap when satisfying the trigger information sent by the network side device being received;
send second configuration information to the terminal device, wherein the second configuration information is used to indicate a specified time, and the specified time is used for the terminal device to perform GNSS measurement according to the measurement gap when satisfying the specified time being reached; or
send third configuration information to the terminal device, wherein the third configuration information is used to indicate the measurement gap, and the measurement gap is used by the terminal device to perform GNSS measurement according to the measurement gap.

28. A communication device, comprising a processor and a memory, the memory storing a computer program, the processor executing the computer program stored in the memory to cause the device to perform the method according to any one of claims 1 to 18, or the processor executing the computer program stored in the memory to cause the device to perform the method according to any one of claims 19 to 25.

29. A communication device, comprising: a processor and an interface circuit;
the interface circuit is configured to receive code instructions and transmit the code instructions to the processor; and
the processor is configured to execute the code instructions to perform the method according to any one of claims 1 to 18, or is configured to execute the code instructions to perform the method according to any one of claims 19 to 25.

30. A computer-readable storage medium storing instructions, which, when executed, enable the method according to any one of claims 1 to 18 to be implemented, or, when executed, enable the method according to any one of claims 19 to 25 to be implemented.
